# EUROPEAN PATENT APPLICATION

(11) **EP 4 432 760 A1**
(43) Date of publication of application: **18.09.2024**
(21) Application number: 22892624.2
(22) Date of filing: 28.10.2022
(51) Int. Cl.: H04W 72/0446, H04W 16/14, H04W 92/18

(54) **COMMUNICATION DEVICE AND COMMUNICATION METHOD**

(30) Priority: 12.11.2021 JP 2021185225
(71) Applicant: Sony Group Corporation, Tokyo 108-0075 (JP)
(72) Inventor: KUSASHIMA, Naoki, Tokyo 108-0075 (JP); SHIMEZAWA, Kazuyuki, Tokyo 108-0075 (JP); UCHIYAMA, Hiromasa, Tokyo 108-0075 (JP); SUGAI, Ren, Tokyo 108-0075 (JP)
(74) Representative: Witte, Weller & Partner Patentanwälte mbB
(86) International application number: PCT/JP2022/040397
(87) International publication number: WO 2023/085125

(57) **Abstract**

A communication device includes a communication control unit that performs sidelink communication on an unlicensed channel within a channel occupancy time of the unlicensed channel, a setting unit that sets a resource pool to be used for the sidelink communication, and a determination unit that determines a resource to be used for the sidelink communication from the set resource pool.

## Description

### Field

The present disclosure relates to a communication device and a communication method.

### Background

Sidelink communication is known as one form of cellular communication. In recent years, in order to enable inexpensive and easy use of sidelink communication, a technology for enabling sidelink communication using an unlicensed band has been developed.

### Citation List

### Non Patent Literature

Non Patent Literature 1: RP-201527, OPPO, "Motivation of sidelink with unlicensed spectrum," 3GPP TSG RAN meeting#89e, Sept. 2020

### Summary

### Technical Problem

The unlicensed band is basically available to anyone. Thus, in order to implement sidelink communication using the unlicensed band, it is necessary to consider sharing of the unlicensed band with other radio access technologies (RATs) or wireless communication devices of other operators. If the unlicensed band is not successfully shared, even if sidelink communication using the unlicensed band is implemented, high communication performance (for example, high throughput, low latency, or high reliability) cannot be achieved.

Accordingly, the present disclosure proposes a communication device and a communication method capable of achieving high communication performance.

Note that the above problem or object is merely one of a plurality of problems or objects that can be solved or achieved by the plurality of embodiments disclosed in the present specification.

### Solution to Problem

In order to solve the above problem, a communication device according to one embodiment of the present disclosure includes: a communication control unit that performs sidelink communication on an unlicensed channel within a channel occupancy time of the unlicensed channel; a setting unit that sets a resource pool to be used for the sidelink communication; and a determination unit that determines a resource to be used for the sidelink communication from the set resource pool.

### Brief Description of Drawings

FIG. 1 is a diagram illustrating a configuration example of a communication system according to an embodiment of the present disclosure.
FIG. 2 is a diagram illustrating a configuration example of a management device according to the embodiment of the present disclosure.
FIG. 3 is a diagram illustrating a configuration example of a base station according to the embodiment of the present disclosure.
FIG. 4 is a diagram illustrating a configuration example of a relay station according to the embodiment of the present disclosure.
FIG. 5 is a diagram illustrating a configuration example of a terminal device according to the embodiment of the present disclosure.
FIG. 6 is a diagram illustrating an outline of sidelink communication.
FIG. 7 is a diagram illustrating a resource pool of a sidelink.
FIG. 8 is a diagram for explaining a resource allocation mode 2(d).
FIG. 9 is a diagram for explaining four types of LBT categories.
FIG. 10A is a diagram illustrating an example of a correspondence table of a priority class and parameters related to channel access.
FIG. 10B is a diagram illustrating an example of mapping between a priority class and QCI.
FIG. 10C is a diagram illustrating an example of mapping between a priority class and 5QI.
FIG. 11 is a diagram illustrating a frame based configuration of frame based equipment.
FIG. 12 is an example of a procedure for sharing a COT acquired by a 3rd device.
FIG. 13 is a diagram illustrating an example of activation/deactivation of resources included in a resource pool by COT.
FIG. 14 is a diagram illustrating an example of a resource pool determination sequence in a case where a COT acquirer is a transmission device.
FIG. 15 is a diagram illustrating an example of a transmission resource determination sequence in a case where the COT acquirer is a reception device.
FIG. 16 is a diagram illustrating another example of the transmission resource determination sequence in a case where the COT acquirer is the reception device.
FIG. 17 is a diagram illustrating another example of the transmission resource determination sequence in a case where the COT acquirer is a base station.
FIG. 18 is a diagram illustrating an example of dynamic resource pool setting based on a COT period.
FIG. 19 is a diagram illustrating an example of a bitmap pattern of the dynamic resource pool setting.
FIG. 20 is a diagram illustrating an example of inter-UE coordination in dynamic resource pool setting.
FIG. 21 is a diagram illustrating an example of a dynamic resource pool setting sequence in a case where both the COT acquirer and a resource pool setter are transmission devices.
FIG. 22 is a diagram illustrating an example of the dynamic resource pool setting sequence in a case where the COT acquirer is a transmission device and the resource pool setter is a base station 20.
FIG. 23 is a diagram illustrating an example of the dynamic resource pool setting sequence in a case where the COT acquirer is a reception terminal device and the resource pool setter is a transmission device.
FIG. 24 is a diagram illustrating an example of the dynamic resource pool setting sequence in a case where both the COT acquirer and a generator of resource pool setting information are base stations.
FIG. 25 is a diagram for explaining COT acquisition processing according to a third embodiment.
FIG. 26 is a diagram illustrating an example of a resource pool determination sequence according to the third embodiment.

### Description of Embodiments

Hereinafter, embodiments of the present disclosure will be described in detail with reference to the drawings. Note that in each of the following embodiments, the same parts are denoted by the same reference numerals, and redundant description will be omitted.

In addition, in the present description and the drawings, a plurality of components having substantially the same functional configuration may be distinguished by attaching different numerals after the same reference numeral. For example, a plurality of configurations having substantially the same functional configuration is distinguished as terminal devices 40₁, 40₂, and 40₃ as necessary. However, in a case where it is not particularly necessary to distinguish each of a plurality of components having substantially the same functional configuration, only the same reference numeral is attached. For example, in a case where it is not necessary to particularly distinguish the terminal devices 40₁, 40₂, and 40₃, they are simply referred to as terminal devices 40.

One or more embodiments (examples and modifications) described below can each be implemented independently. On the other hand, at least some of the plurality of embodiments described below may be appropriately combined with at least some of other embodiments. The plurality of embodiments may include novel features different from each other. Therefore, the plurality of embodiments can contribute to solving different objects or problems, and can exhibit different effects.

### <<Outline>>

Radio access technology (RAT) such as long term evolution (LTE) and new radio (NR) has been studied in the 3rd generation partnership project (3GPP). LTE and NR are a type of cellular communication technology, and enable mobile communication of a terminal device by arranging a plurality of areas covered by a base station in a cell shape. At this time, a single base station may manage a plurality of cells.

Note that, in the following description, "LTE" includes LTE-A (LTE-Advanced), LTE-A Pro (LTE-Advanced Pro), and E-UTRA (Evolved Universal Terrestrial Radio Access). In addition, the NR includes NRAT (New Radio Access Technology) and FE-UTRA (Further E-UTRA). In the following description, a cell corresponding to LTE is referred to as an LTE cell, and a cell corresponding to NR is referred to as an NR cell.

NR is a next generation (fifth generation) radio access technology (RAT) of LTE. The NR is a radio access technology that can support various use cases including enhanced mobile broadband (eMBB), massive machine type communications (mMTC), and ultra-reliable and low latency communications (URLLC). NR has been studied aiming at a technical framework corresponding to usage scenarios, requirement conditions, arrangement scenarios, and the like in these use cases.

Sidelink communication has been introduced by 3GPP with communication for public safety and vehicle to anything (V2X) as main use cases. In recent years, utilization of sidelink communication has been expected for not only V2X but also commercial use communication. Examples of the communication of commercial use include XR (VR (Virtual Reality), AR (Augmented Reality), or MR (Mixed Reality)) gaming, real-time sharing of XR content, media sharing, wireless tethering, an industrial Internet of Things (IoT) network, and a home network.

Commercial communication requires provision of inexpensive and easy services in addition to high quality. Accordingly, in the present embodiment, sidelink communication using the unlicensed band will be considered. The unlicensed band is a frequency band that can be used by anyone. Thus, if the unlicensed band is used, inexpensive and easy service provision can be implemented. Note that the unlicensed band may be referred to as unlicensed spectrum, licensed shared band, or shared spectrum.

The unlicensed band is basically available to anyone. Thus, in order to implement sidelink communication using the unlicensed band, it is necessary to consider sharing of the unlicensed band with other radio access technologies (RATs) or wireless communication devices of other operators. If the unlicensed band is not successfully shared, even if sidelink communication using the unlicensed band is implemented, it is difficult to achieve high communication performance (for example, high throughput, low latency, or high reliability).

Accordingly, in the present embodiment, the above problem is solved by the following method.

A terminal device according to the present embodiment uses a resource pool in sidelink communication using an unlicensed band. The resource pool is a set of resources available for sidelink communication by the terminal device. The terminal device determines a sidelink transmission resource on the basis of the information of the resource pool. By using the resource pool, it is possible to reduce communication contention between sidelinks and interference with other RATs.

More specifically, the terminal device in the present embodiment operates as follows.

For example, the terminal device in the present embodiment acquires information of a channel occupancy time (COT) of an unlicensed channel in order to use the unlicensed band. The information of the channel occupancy time can be acquired by performing channel access. The channel access may be rephrased as listen before talk (LBT). The channel access may be performed by another communication device such as a base station. In this case, the another communication device shares the acquired channel occupancy time information with the terminal device.

The terminal device (alternatively, another communication device) performs channel access before sending a signal, and acquires information of channel occupancy time. The terminal device sets a resource pool to be used for sidelink communication, and determines a resource to be used for sidelink communication from the set resource pool. The resource to be used by the terminal device for sidelink communication is a resource whose time overlaps the channel occupancy time among resources of the set resource pool. For example, after acquiring the information of the channel occupancy time, the terminal device excludes, from selection candidates, a resource whose time is not included in the channel occupancy time. Then, the terminal device selects a resource to be used for sidelink communication from the remaining resources of the resource pool. Then, the terminal device performs the sidelink communication within the channel occupancy time by using the determined resource.

Thus, even in a case where the unlicensed band is used for sidelink communication, the terminal device can achieve high communication performance.

Note that, in general, the resource pool is semi-statically set from congestion degree information in the resource pool, scheduling information of sidelink control information (SCI), and the like. Thus, also in the setting of the resource pool in sidelink communication, it is assumed that the resource pool is set before the channel access (before the information of the channel occupancy time is acquired). However, the terminal device in the present embodiment may acquire the information of the channel occupancy time before setting the resource pool. Then, the terminal device may set the resource pool on the basis of the information of the channel occupancy time. In this manner, the resource pool can be efficiently set, and thus the terminal device can achieve high communication performance.

In addition, the terminal device according to the present embodiment may perform channel access so that the time of the resource selected from the resource pool is included in the channel occupancy time. Then, when the channel access is successful, the terminal device may perform the sidelink communication using the selected resource. This enables efficient channel access, so that the terminal device can achieve high communication performance.

While the outline of the present embodiment has been described above, the communication system according to the present embodiment will be described in detail below.

### <<Configuration of communication system>>

First, a configuration of a communication system 1 will be specifically described with reference to the drawings.

### <Overall configuration of communication system>

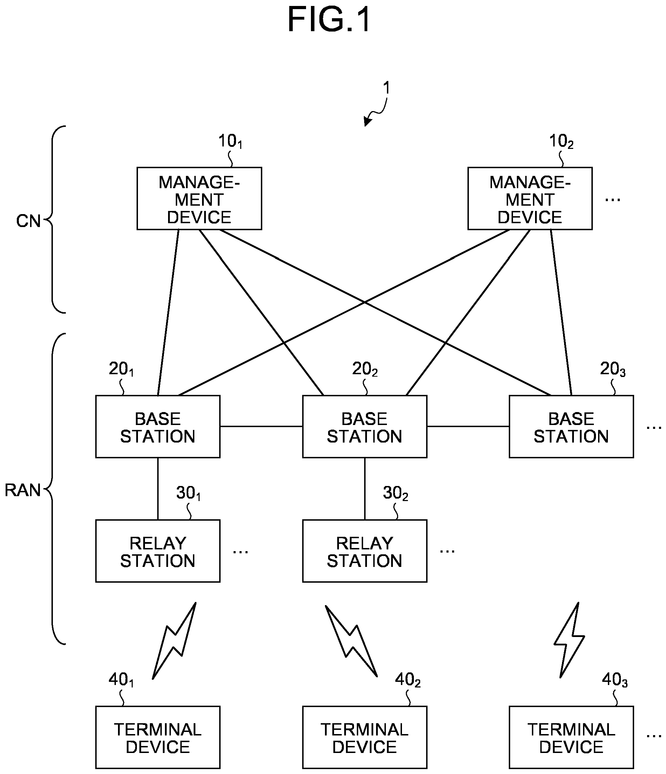

FIG. 1 is a diagram illustrating a configuration example of the communication system 1 according to the embodiment of the present disclosure. The communication system 1 includes a management device 10, a base station 20, a relay station 30, and a terminal device 40. The communication system 1 provides the user with a wireless network capable of mobile communication by wireless communication devices constituting the communication system 1 operating in cooperation. The wireless network of the present embodiment includes, for example, a radio access network and a core network. Note that, in the present embodiment, the wireless communication device is a device having a function of wireless communication, and corresponds to the base station 20, the relay station 30, and the terminal device 40 in the example of FIG. 1. In the following description, the wireless communication device may be simply referred to as a communication device.

The communication system 1 may include a plurality of management devices 10, a plurality of the base stations 20, a plurality of the relay stations 30, and a plurality of the terminal devices 40. In the example of FIG. 1, the communication system 1 includes management devices 10₁ and 10₂ and the like as the management device 10, and includes base stations 20₂ and 20₂ and the like as the base station 20. Further, the communication system 1 includes relay stations 30₂ and 30₂ and the like as the relay station 30, and includes the terminal devices 40₁, 40₂, and 40₃ and the like as the terminal device 40.

Note that the devices in the drawings may be considered as devices in the logical sense. That is, a part of the device in the drawing may be implemented by a virtual machine (VM), Container, Docker, or the like, and these may be implemented on physically the same hardware.

Note that the communication system 1 may support a radio access technology (RAT) such as long term evolution (LTE) or new radio (NR). LTE and NR are a type of cellular communication technology, and enable mobile communication of a terminal device by arranging a plurality of areas covered by a base station in a cell shape.

Note that the radio access method used by the communication system 1 is not limited to LTE and NR, and may be another radio access method such as Wideband Code Division Multiple Access (W-CDMA) or Code Division Multiple Access 2000 (cdma 2000).

In addition, the base station or the relay station constituting the communication system 1 may be a ground station or a non-ground station. The non-ground station may be a satellite station or an aircraft station. If the non-ground station is a satellite station, the communication system 1 may be a Bent-pipe (Transparent) type mobile satellite communication system.

Note that, in the present embodiment, the ground station (it is also referred to as a ground base station) refers to a base station (a relay station) installed on the ground. Here, the "ground" is a ground in a broad sense including not only land but also underground, on water, and under water. Note that, in the following description, the description of "ground station" may be replaced with "gateway".

Note that an LTE base station may be referred to as an evolved node B (eNodeB) or an eNB. Further, an NR base station may be referred to as a gNodeB or a gNB. In addition, in LTE and NR, a terminal device (it is also referred to as a mobile station or a terminal) may be referred to as user equipment (UE). Note that the terminal device is a type of communication device, and is also referred to as a mobile station or a terminal.

In the present embodiment, the concept of the communication device includes not only a portable mobile device (terminal device) such as a mobile terminal but also a device installed in a structure or a mobile object. The structure or the mobile object itself may be regarded as the communication device. In addition, the concept of the communication device includes not only a terminal device but also a base station and a relay station. The communication device is a type of a processing device and an information processing device. Furthermore, the communication device can be rephrased as a transmission device or a reception device.

Hereinafter, a configuration of each device constituting the communication system 1 will be specifically described. Note that the configuration of each device described below is merely an example. The configuration of each device may be different from the configuration described below.

### <Configuration of management device>

Next, a configuration of the management device 10 will be described.

The management device 10 is a device that manages a wireless network. For example, the management device 10 is a device that manages communication of the base station 20. The management device 10 may be, for example, a device having a function as a mobility management entity (MME). The management device 10 may be a device having a function as an access and mobility management function (AMF) and/or a session management function (SMF). Of course, the functions of the management device 10 are not limited to the MME, the AMF, and the SMF. The management device 10 may be a device having a function as a network slice selection function (NSSF), an authentication server function (AUSF), a policy control function (PCF), or a unified data management (UDM). In addition, the management device 10 may be a device having a function as a home subscriber server (HSS).

Note that the management device 10 may have a function of a gateway. For example, the management device 10 may have a function as a serving gateway (S-GW) or a packet data network gateway (P-GW). Further, the management device 10 may have a function as a user plane function (UPF).

The core network includes a plurality of network functions, and each network function may be aggregated into one physical device or distributed to a plurality of physical devices. That is, the management device 10 can be dispersedly arranged in a plurality of devices. Furthermore, this distributed arrangement may be controlled to be performed dynamically. The base station 20 and the management device 10 constitute one network, and provide a wireless communication service to the terminal device 40. The management device 10 is connected to the Internet, and the terminal device 40 can use various services provided via the Internet via the base station 20.

Note that the management device 10 is not necessarily a device constituting the core network. For example, it is assumed that the core network is a core network of Wideband Code Division Multiple Access (W-CDMA) or Code Division Multiple Access 2000 (cdma 2000). At this time, the management device 10 may be a device that functions as a radio network controller (RNC).

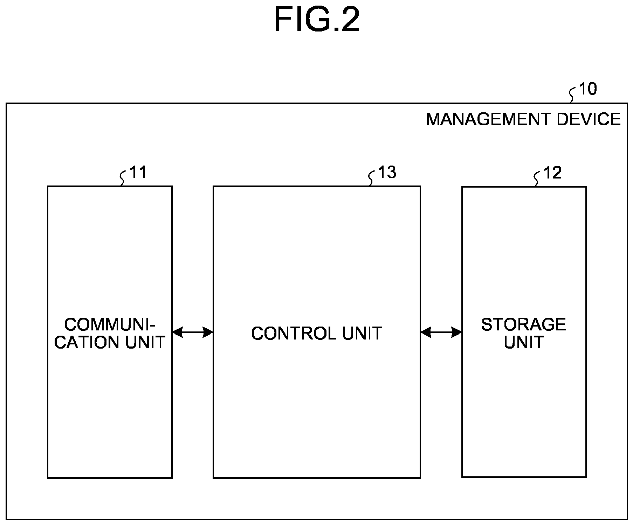

FIG. 2 is a diagram illustrating a configuration example of the management device 10 according to the embodiment of the present disclosure. The management device 10 includes a communication unit 11, a storage unit 12, and a control unit 13. Note that the configuration illustrated in FIG. 2 is a functional configuration, and the hardware configuration may be different from the functional configuration. In addition, the functions of the management device 10 may be statically or dynamically distributed and implemented in a plurality of physically separated configurations. For example, the management device 10 may include a plurality of server devices.

The communication unit 11 is a communication interface for communicating with other devices. The communication unit 11 may be a network interface or a device connection interface. For example, the communication unit 11 may be a local area network (LAN) interface such as a network interface card (NIC), or may be a USB interface including a universal serial bus (USB) host controller, a USB port, and the like. Further, the communication unit 11 may be a wired interface or a wireless interface. The communication unit 11 functions as a communication means of the management device 10. The communication unit 11 communicates with the base station 20 and the like under the control of the control unit 13.

The storage unit 12 is a data readable/writable storage device such as a dynamic random access memory (DRAM), a static random access memory (SRAM), a flash memory, or a hard disk. The storage unit 12 functions as a storage means of the management device 10. The storage unit 12 stores, for example, a connection state of the terminal device 40. For example, the storage unit 12 stores a radio resource control (RRC) state or an EPS connection management (ECM) state or a 5G system connection management (CM) state of the terminal device 40. The storage unit 12 may function as a home memory that stores position information of the terminal device 40.

The control unit 13 is a controller that controls each unit of the management device 10. The control unit 13 is implemented by, for example, a processor such as a central processing unit (CPU), a micro processing unit (MPU), or a graphics processing unit (GPU). For example, the control unit 13 is implemented by the processor executing various programs stored in the storage device inside the management device 10 using a random access memory (RAM) or the like as a work area. Note that the control unit 13 may be implemented by an integrated circuit such as an application specific integrated circuit (ASIC) or a field programmable gate array (FPGA). Any of the CPU, the MPU, the GPU, the ASIC, and the FPGA can be regarded as a controller.

### <Configuration of base station>

Next, a configuration of the base station 20 will be described.

The base station 20 is a wireless communication device that performs wireless communication with the terminal device 40. The base station 20 may be configured to wirelessly communicate with the terminal device 40 via the relay station 30, or may be configured to directly wirelessly communicate with the terminal device 40.

The base station 20 is a type of communication device. More specifically, the base station 20 is a device corresponding to a wireless base station (Base Station, Node B, eNB, gNB, and the like) or a wireless access point (Access Point). The base station 20 may be a wireless relay station. In addition, the base station 20 may be an optical extension device called a remote radio head (RRH) or a radio unit (RU). Further, the base station 20 may be a receiving station such as a field pickup unit (FPU). In addition, the base station 20 may be an integrated access and backhaul (IAB) donor node or an IAB relay node that provides a wireless access line and a radio backhaul line by time division multiplexing, frequency division multiplexing, or space division multiplexing.

Note that the radio access technology used by the base station 20 may be a cellular communication technology or a wireless LAN technology. Of course, the radio access technology used by the base station 20 is not limited thereto, and may be another radio access technology. For example, the radio access technology used by the base station 20 may be a low power wide area (LPWA) communication technology. Of course, the wireless communication used by the base station 20 may be wireless communication using millimeter waves. In addition, the wireless communication used by the base station 20 may be wireless communication using radio waves or wireless communication (optical radio) using infrared rays or visible light.

The base station 20 may be capable of non-orthogonal multiple access (NOMA) communication with the terminal device 40. Here, the NOMA communication is communication using a non-orthogonal resource (transmission, reception, or both). Note that the base station 20 may be able to perform NOMA communication with another base station 20.

Note that the base station 20 may be capable of communicating with each other via an interface between a base station and a core network (for example, NG Interface, S1 Interface, or the like). This interface may be either wired or wireless. Furthermore, the base stations may be capable of communicating with each other via an inter-base station interface (for example, Xn Interface, X2 Interface, S1 Interface, F1 Interface, and the like). This interface may be either wired or wireless.

Note that the concept of the base station includes not only a donor base station but also a relay base station (also referred to as a relay station). For example, the relay base station may be any one of RF Repeater, Smart Repeater, and Intelligent Surface. Further, the concept of the base station includes not only a structure having a function of the base station but also a device installed in the structure.

The structure is, for example, a building such as a high-rise building, a house, a steel tower, a station facility, an airport facility, a harbor facility, an office building, a school building, a hospital, a factory, a commercial facility, or a stadium. Note that the concept of a structure includes not only a building but also a construction (non-building structure) such as a tunnel, a bridge, a dam, a wall, or an iron pillar, and equipment such as a crane, a gate, or a windmill. Further, the concept of the structure includes not only a structure on land (on the ground in a narrow sense) or underground, but also a structure on water such as a platform or a megafloat, and a structure under water such as a marine observation facility. The base station can be rephrased as an information processing device.

The base station 20 may be a donor station or a relay station (relay station). In addition, the base station 20 may be a fixed station or a mobile station. The mobile station is a wireless communication device (for example, the base station) configured to be movable. At this time, the base station 20 may be a device installed in a mobile object or may be a mobile object itself. For example, a relay station having mobility can be regarded as the base station 20 as a mobile station. Further, an apparatus that is originally capable of moving, such as a vehicle, an unmanned aerial vehicle (UAV) typified by a drone, or a smartphone, and has a function of a base station (at least a part of the function of the base station) also corresponds to the base station 20 as a mobile station.

Here, the mobile object may be a mobile terminal such as a smartphone or a mobile phone. In addition, the mobile object may be a mobile object (for example, a vehicle such as an automobile, a bicycle, a bus, a truck, a motorcycle, a train, or a linear motor car) that moves on land (on the ground in a narrow sense) or a mobile object (for example, the subway) that moves underground (for example, in the tunnel).

In addition, the mobile object may be a mobile object (for example, a ship such as a passenger ship, a cargo ship, or a hovercraft) that moves over water or a mobile object (for example, a submersible vessel such as a submersible, a submarine, and an unmanned submersible) that moves under water.

Note that the mobile object may be a mobile object (for example, an aircraft such as an airplane, an airship, or a drone) that moves in the atmosphere.

In addition, the base station 20 may be a ground base station (ground station) installed on the ground. For example, the base station 20 may be a base station arranged in a structure on the ground, or may be a base station installed in a mobile object moving on the ground. More specifically, the base station 20 may be an antenna installed in a structure such as a building and a signal processing device connected to the antenna. Of course, the base station 20 may be a structure or a mobile object itself. The "ground" is a ground in a broad sense including not only land (ground in a narrow sense) but also underground, on water, and under water. Note that the base station 20 is not limited to a ground base station. For example, in a case where the communication system 1 is a satellite communication system, the base station 20 may be an aircraft station. From the perspective of a satellite station, an aircraft station located on the earth is a ground station.

Note that the base station 20 is not limited to a ground station. The base station 20 may be a non-ground base station (non-ground station) capable of floating in the air or space. For example, the base station 20 may be an aircraft station or a satellite station.

The satellite station is a satellite station capable of floating outside the atmosphere. The satellite station may be a device mounted on a space mobile object such as an artificial satellite, or may be a space mobile object itself. The space mobile object is a moving vehicle that moves outside the atmosphere. Examples of the space mobile object include artificial celestial bodies such as artificial satellites, spacecrafts, space stations, and probes.

Note that the satellite to be the satellite station may be any of a low earth orbiting (LEO) satellite, a medium earth orbiting (MEO) satellite, a geostationary earth orbiting (GEO) satellite, and a highly elliptical orbiting (HEO) satellite. Of course, the satellite station may be a device mounted on the low earth orbiting satellite, the medium earth orbiting satellite, the geostationary earth orbiting satellite, or the highly elliptical orbiting satellite.

The aircraft station is a wireless communication device capable of floating in the atmosphere, such as an aircraft. The aircraft station may be a device mounted on an aircraft or the like, or may be an aircraft itself. Note that the concept of an aircraft includes not only heavy aircraft such as an airplane and a glider but also light aircraft such as a balloon and an airship. Further, the concept of an aircraft includes not only a heavy aircraft and a light aircraft but also a rotorcraft such as a helicopter and an autogyro. Note that the aircraft station (alternatively, an aircraft on which an aircraft station is mounted) may be an unmanned aerial vehicle such as a drone.

Note that the concept of the unmanned aerial vehicle also includes unmanned aircraft systems (UAS) and tethered UAS. Further, the concept of unmanned aerial vehicles also includes Lighter than Air UAS (LTA) and Heavier than Air UAS (HTA). Other concepts of unmanned aerial vehicles also include High Altitude UAS Platforms (HAPs).

The size of coverage of the base station 20 may be large like a macro cell or small like a pico cell. Of course, the size of the coverage of the base station 20 may be extremely small like a femto cell. In addition, the base station 20 may have a beamforming capability. In this case, the base station 20 may form a cell or a service area for each beam.

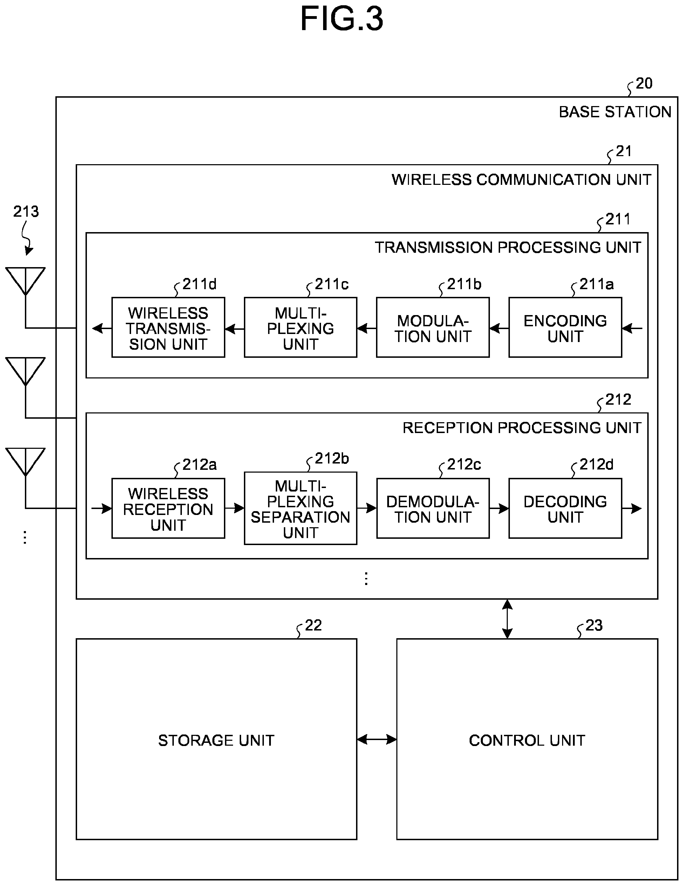

FIG. 3 is a diagram illustrating a configuration example of the base station 20 according to the embodiment of the present disclosure. The base station 20 includes a wireless communication unit 21, a storage unit 22, and a control unit 23. Note that the configuration illustrated in FIG. 3 is a functional configuration, and the hardware configuration may be different from the functional configuration. In addition, the functions of the base station 20 may be implemented in a distributed manner in a plurality of physically separated configurations.

The wireless communication unit 21 is a signal processing unit for wirelessly communicating with other wireless communication devices (for example, the terminal device 40). The wireless communication unit 21 operates under the control of the control unit 23. The wireless communication unit 21 corresponds to one or a plurality of wireless access methods. For example, the wireless communication unit 21 supports both NR and LTE. The wireless communication unit 21 may be compatible with W-CDMA or cdma 2000 in addition to NR or LTE. In addition, the wireless communication unit 21 may support an automatic retransmission technology such as hybrid automatic repeat request (HARQ).

The wireless communication unit 21 includes a transmission processing unit 211, a reception processing unit 212, and an antenna 213. The wireless communication unit 21 may include a plurality of transmission processing units 211, a plurality of reception processing units 212, and a plurality of antennas 213. Note that, in a case where the wireless communication unit 21 supports a plurality of wireless access methods, each unit of the wireless communication unit 21 can be configured individually for each wireless access method. For example, the transmission processing unit 211 and the reception processing unit 212 may be individually configured by LTE and NR. In addition, the antenna 213 may include a plurality of antenna elements (for example, a plurality of patch antennas). In this case, the wireless communication unit 21 may be configured to be beamformable. The wireless communication unit 21 may be configured to be able to perform polarization beamforming using vertically polarized waves (V-polarized waves) and horizontally polarized waves (H-polarized waves).

The transmission processing unit 211 performs a process of transmitting downlink control information and downlink data. For example, the transmission processing unit 211 encodes the downlink control information and the downlink data input from the control unit 23 using an encoding method such as block encoding, convolutional encoding, turbo encoding, or the like. Here, the encoding may be performed by polar code encoding or low density parity check code (LDPC code) encoding. Then, the transmission processing unit 211 modulates the coded bits by a predetermined modulation method such as BPSK, QPSK, 16 QAM, 64 QAM, or 256 QAM. In this case, signal points on a constellation do not necessarily have to be equidistant. The constellation may be a non uniform constellation (NUC). Then, the transmission processing unit 211 multiplexes the modulation symbol of each channel and a downlink reference signal and arranges the multiplexed symbols in a predetermined resource element. Then, the transmission processing unit 211 performs various types of signal processing on the multiplexed signal. For example, the transmission processing unit 211 performs processing such as conversion to a frequency domain by fast Fourier transform, addition of a guard interval (cyclic prefix), generation of a baseband digital signal, conversion to an analog signal, quadrature modulation, up-conversion, removal of an extra frequency component, and amplification of power. The signal generated by the transmission processing unit 211 is transmitted from the antenna 213.

The reception processing unit 212 processes the uplink signal received via the antenna 213. For example, the reception processing unit 212 performs, on the uplink signal, down-conversion, removal of an unnecessary frequency component, control of an amplification level, quadrature demodulation, conversion to a digital signal, removal of a guard interval (cyclic prefix), extraction of a frequency domain signal by fast Fourier transform, and the like. Then, the reception processing unit 212 demultiplexes an uplink channel such as a physical uplink shared channel (PUSCH) or a physical uplink control channel (PUCCH) and an uplink reference signal from the signals subjected to these processes. Further, the reception processing unit 212 demodulates the reception signal using a modulation method such as binary phase shift keying (BPSK) or quadrature phase shift keying (QPSK) with respect to a modulation symbol of the uplink channel. The modulation method used for demodulation may be 16 quadrature amplitude modulation (QAM), 64 QAM, or 256 QAM. In this case, signal points on a constellation do not necessarily have to be equidistant. The constellation may be a non-uniform constellation (NUC). Then, the reception processing unit 212 performs a decoding process on the demodulated coded bits of the uplink channel. Decoded uplink data and uplink control information are output to the control unit 23.

The antenna 213 is an antenna device (antenna unit) that mutually converts a current and a radio wave. The antenna 213 may include one antenna element (for example, one patch antenna) or may include a plurality of antenna elements (for example, a plurality of patch antennas). In a case where the antenna 213 includes a plurality of antenna elements, the wireless communication unit 21 may be configured to be beamformable. For example, the wireless communication unit 21 may be configured to generate a directional beam by controlling the directivity of a wireless signal using a plurality of antenna elements. Note that the antenna 213 may be a dual-polarized antenna. When the antenna 213 is a dual-polarized antenna, the wireless communication unit 21 may use vertically polarized waves (V-polarized waves) and horizontally polarized waves (H-polarized waves) in transmitting wireless signals. Then, the wireless communication unit 21 may control the directivity of the wireless signal transmitted using the vertically polarized wave and the horizontally polarized wave. In addition, the wireless communication unit 21 may transmit and receive spatially multiplexed signals via a plurality of layers including a plurality of antenna elements.

The storage unit 22 is a storage means capable of reading and writing data, such as a DRAM, an SRAM, a flash memory, or a hard disk. The storage unit 22 functions as a storage means of the base station 20.

The control unit 23 is a controller that controls each unit of the base station 20. The control unit 23 is implemented by, for example, a processor such as a central processing unit (CPU) or a micro processing unit (MPU). For example, the control unit 23 is implemented by a processor executing various programs stored in a storage device inside the base station 20 using a random access memory (RAM) or the like as a work area. Note that the control unit 23 may be implemented by an integrated circuit such as an application specific integrated circuit (ASIC) or a field programmable gate array (FPGA). Any of the CPU, the MPU, the ASIC, and the FPGA can be regarded as a controller. In addition, the control unit 23 may be implemented by a graphics processing unit (GPU) in addition to or instead of the CPU.

In some embodiments, the concept of a base station may include a collection of multiple physical or logical devices. For example, in the present embodiment, the base station may be distinguished into a plurality of devices such as a baseband unit (BBU) and a radio unit (RU). Then, the base station may be interpreted as an assembly of the plurality of devices. In addition, the base station may be either or both of the BBU and the RU. The BBU and the RU may be connected by a predetermined interface (for example, enhanced Common Public Radio Interface (eCPRI)). Note that the RU may be rephrased as a remote radio unit (RRU) or a radio dot (RD). Further, the RU may correspond to a gNB Distributed Unit (gNB-DU) described later. Furthermore, the BBU may correspond to a gNB-CU (gNB Central Unit) described below. Alternatively, the RU may be a wireless device connected to a gNB-DU described later. The gNB-CU, the gNB-DU, and the RU connected to the gNB-DU may be configured to conform to an open radio access network (O-RAN). Further, the RU may be a device integrally formed with the antenna. An antenna (for example, an antenna integrally formed with an RU) included in the base station may employ an Advanced Antenna System and support MIMO (for example, FD (Full Dimension)-MIMO) or beamforming. In addition, the antenna included in the base station may include, for example, 64 transmission antenna ports and 64 reception antenna ports.

In addition, the antenna mounted on the RU may be an antenna panel including one or more antenna elements, and the RU may be mounted with one or more antenna panels. For example, the RU may be equipped with two types of antenna panels of a horizontally polarized antenna panel and a vertically polarized antenna panel, or two types of antenna panels of a clockwise circularly polarized antenna panel and a counterclockwise circularly polarized antenna panel. In addition, the RU may form and control an independent beam for each antenna panel.

Note that a plurality of base stations may be connected to each other. The one or a plurality of base stations may be included in the radio access network (RAN). In this case, the base station may be simply referred to as a RAN, a RAN node, an access network (AN), or an AN node. Note that the RAN in LTE is sometimes referred to as an enhanced universal terrestrial RAN (EUTRAN). In addition, RAN in NR may be referred to as NGR_AN. In addition, RAN in W-CDMA (UMTS) is sometimes referred to as UTRAN.

Note that an LTE base station may be referred to as an evolved node B (eNodeB) or an eNB. At this time, the EUTRAN includes one or a plurality of eNodeBs (eNBs). Further, an NR base station may be referred to as a gNodeB or a gNB. At this time, the NGR_AN includes one or a plurality of gNBs. The EUTR_AN may include a gNB (en-gNB) connected to a core network (EPC) in an LTE communication system (EPS). Similarly, the NGR_AN may include an ng-eNB connected to a core network 5GC in a 5G communications system (5GS).

Note that, in a case where the base station is an eNB, a gNB, or the like, the base station may be referred to as 3GPP access. In addition, in a case where the base station is a wireless access point (Access Point), the base station may be referred to as non-3GPP access. Further, the base station may be an optical extension device called a remote radio head (RRH) or a radio unit (RU). In addition, in a case where the base station is a gNB, the base station may be a combination of the gNB-CU and the gNB-DU described above, or may be any one of the gNB-CU and the gNB-DU.

Here, the gNB-CU hosts a plurality of upper layers (for example, Radio Resource Control (RRC), Service Data Adaptation Protocol (SDAP), and Packet Data Convergence Protocol (PDCP)) in an access stratum for communication with the UE. On the other hand, the gNB-DU hosts a plurality of lower layers (for example, radio link control (RLC), medium access control (MAC), and physical layer (PHY)) in an access stratum. That is, among messages/information to be described later, RRC signaling (semi-static notification) may be generated by the gNB-CU, while MAC CE and DCI (dynamic notification) may be generated by the gNB-DU. Alternatively, in an RRC configuration (semi-static notification), for example, some configurations such as IE: cellGroupConfig may be generated by the gNB-DU, and remaining configurations may be generated by the gNB-CU. These configurations may be transmitted and received through an F1 interface described later.

Note that the base station may be configured to be able to communicate with another base station. For example, in a case where a plurality of base stations is eNBs or a combination of an eNB and an en-gNB, the base stations may be connected by an X2 interface. In addition, in a case where a plurality of base stations is gNBs or a combination of a gn-eNB and a gNB, the devices may be connected by an Xn interface. Further, in a case where a plurality of base stations is a combination of the gNB-CU and the gNB-DU, the devices may be connected by the above-described F1 interface. A message/information (for example, RRC signaling, MAC control element (MAC CE), or DCI) to be described later may be transmitted between a plurality of base stations, for example, via an X2 interface, an Xn interface, or an F1 interface.

A cell provided by the base station may be referred to as a serving cell (Serving Cell). The concept of the serving cell includes a primary cell (PCell) and a secondary cell (SCell). When dual connectivity is configured for a UE (for example, the terminal device 40), the PCell provided by the MN (Master Node) and zero or one or more SCells may be referred to as a Master Cell Group. Examples of dual connectivity include EUTRA-EUTRA Dual Connectivity, EUTRA-NR Dual Connectivity (ENDC), EUTRA-NR Dual Connectivity with 5GC, NR-EUTRA Dual Connectivity (NEDC), and NR-NR Dual Connectivity.

Note that the serving cell may include a PSCell (Primary Secondary Cell or Primary SCG Cell). When dual connectivity is configured for the UE, the PSCell provided by the SN (Secondary Node) and zero or one or more SCells may be referred to as SCG (Secondary Cell Group). Unless specially configured (for example, PUCCH on SCell), the physical uplink control channel (PUCCH) is transmitted in the PCell and the PSCell, but is not transmitted in the SCell. In addition, a radio link failure is also detected in the PCell and the PSCell, but is not detected in the SCell (may not be detected). As described above, since the PCell and the PSCell have a special role in the serving cell, they are also referred to as SpCell (Special Cell).

One downlink component carrier and one uplink component carrier may be associated with one cell. In addition, the system bandwidth corresponding to one cell may be divided into a plurality of bandwidth parts (BWPs). In this case, one or a plurality of BWPs may be configured for the UE, and one BWP may be used for the UE as an active BWP (Active BWP). Furthermore, radio resources (for example, a frequency band, numerology (subcarrier spacing), and a slot configuration) that can be used by the terminal device 40 may be different for each cell, each component carrier, or each BWP.

### <Configuration of relay station>

Next, a configuration of the relay station 30 will be described.

The relay station 30 is a device serving as a relay station of the base station. The relay station 30 is a type of base station. In addition, the relay station 30 is a type of information processing device. The relay station can be rephrased as a relay base station. In addition, the relay station 30 may be a device called a repeater (for example, RF Repeater, Smart Repeater, or Intelligent Surface).

The relay station 30 can perform wireless communication such as NOMA communication with the terminal device 40. The relay station 30 relays communication between the base station 20 and the terminal device 40. Note that the relay station 30 may be configured to be able to wirelessly communicate with the other relay station 30 and the base station 20. The relay station 30 may be a ground station device or a non-ground station device. The relay station 30 constitutes a radio access network RAN together with the base station 20.

Note that the relay station of the present embodiment may be a fixed device, a movable device, or a floating device. In addition, the size of the coverage of the relay station of the present embodiment is not limited to a specific size. For example, the cell covered by the relay station may be a macro cell, a micro cell, or a small cell.

In addition, the relay station of the present embodiment is not limited to the mounted device as long as the function of relay is satisfied. For example, the relay may be mounted on a terminal device such as a smartphone, may be mounted on an automobile, a train, or a human-powered vehicle, may be mounted on a balloon, an airplane, or a drone, may be mounted on a traffic light, a sign, a street light, or the like, or may be mounted on a home appliance such as a television, a game machine, an air conditioner, a refrigerator, or a lighting fixture.

In addition, the configuration of the relay station 30 may be similar to the configuration of the base station 20 described above. For example, similarly to the base station 20 described above, the relay station 30 may be a device installed in a mobile object or may be a mobile object itself. As described above, the mobile object may be a mobile terminal such as a smartphone or a mobile phone. In addition, the mobile object may be a mobile object that moves on land (on the ground in a narrow sense) or may be a mobile object that moves underground. Of course, the mobile object may be a mobile object that moves over water or may be a mobile object that moves under water. In addition, the mobile object may be a mobile object that moves inside the atmosphere or may be a mobile object that moves outside the atmosphere. In addition, the relay station 30 may be a ground station device or a non-ground station device. At this time, the relay station 30 may be an aircraft station or a satellite station.

In addition, the magnitude of the coverage of the relay station 30 may be large such as a macro cell or small such as a pico cell, similarly to the base station 20. Of course, the magnitude of the coverage of the relay station 30 may be extremely small such as a femto cell. In addition, the relay station 30 may have a beamforming capability. In this case, in the relay station 30, a cell or a service area may be formed for each beam.

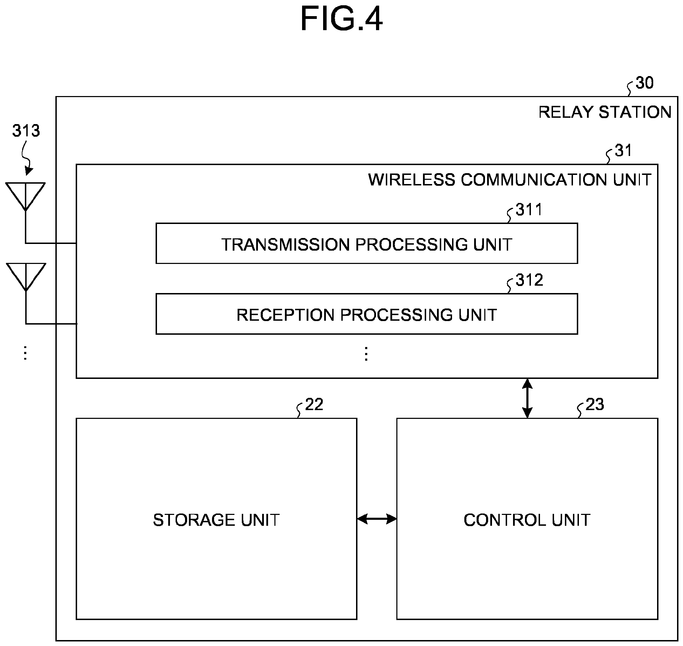

FIG. 4 is a diagram illustrating a configuration example of the relay station 30 according to the embodiment of the present disclosure. The relay station 30 includes a wireless communication unit 31, a storage unit 32, and a control unit 33. Note that the configuration illustrated in FIG. 4 is a functional configuration, and the hardware configuration may be different from the functional configuration. In addition, the functions of the relay station 30 may be implemented in a distributed manner in a plurality of physically separated configurations.

The wireless communication unit 31 is a wireless communication interface that wirelessly communicates with other wireless communication devices (for example, the base station 20, the terminal device 40, and another relay station 30). The wireless communication unit 31 corresponds to one or a plurality of wireless access methods. For example, the wireless communication unit 31 supports both NR and LTE. The wireless communication unit 31 may be compatible with W-CDMA or cdma 2000 in addition to NR or LTE. The wireless communication unit 31 includes a transmission processing unit 311, a reception processing unit 312, and an antenna 313. The wireless communication unit 31 may include a plurality of transmission processing units 311, a plurality of reception processing units 312, and a plurality of antennas 313. Note that, in a case where the wireless communication unit 31 supports a plurality of wireless access methods, each unit of the wireless communication unit 31 can be configured individually for each wireless access method. For example, the transmission processing unit 311 and the reception processing unit 312 may be individually configured by LTE and NR. The configurations of the transmission processing unit 311, the reception processing unit 312, and the antenna 313 are similar to the configurations of the transmission processing unit 211, the reception processing unit 212, and the antenna 213 described above. Note that the wireless communication unit 31 may be configured to be beamformable similarly to the wireless communication unit 21.

The storage unit 32 is a storage device capable of reading and writing data, such as a DRAM, an SRAM, a flash memory, or a hard disk. The storage unit 32 functions as a storage means of the relay station 30.

The control unit 33 is a controller that controls each unit of the relay station 30. The control unit 33 is implemented by, for example, a processor such as a CPU, an MPU, or a GPU. For example, the control unit 33 is implemented by a processor executing various programs stored in a storage device inside the relay station 30 using a RAM or the like as a work area. Note that the control unit 33 may be implemented by an integrated circuit such as an ASIC or an FPGA. Any of the CPU, the MPU, the GPU, the ASIC, and the FPGA can be regarded as a controller. The operation of the control unit 33 may be the same as the operation of the control unit 23 of the base station 20.

Note that the relay station 30 may be an IAB relay node. The relay station 30 operates as an IAB-MT (Mobile Termination) for an IAB donor node that provides backhaul, and operates as an IAB-DU (Distributed Unit) for the terminal device 40 that provides access. The IAB donor node may be, for example, the base station 20, and operates as an IAB-CU (Central Unit).

### <Configuration of terminal device>

Next, a configuration of the terminal device 40 will be described.

The terminal device 40 is a wireless communication device that wirelessly communicates with other communication devices such as the base station 20 and the relay station 30. The terminal device 40 is, for example, a mobile phone, a smart device (smartphone or tablet), a personal digital assistant (PDA), or a personal computer. In addition, the terminal device 40 may be a device such as a business camera provided with a communication function, or may be a motorcycle, a moving relay vehicle, or the like on which a communication device such as a field pickup unit (FPU) is mounted. In addition, the terminal device 40 may be a machine to machine (M2M) device or an Internet of Things (IoT) device.

Note that the terminal device 40 may be able to perform NOMA communication with the base station 20. In addition, the terminal device 40 may be able to use an automatic retransmission technology such as HARQ when communicating with the base station 20. In addition, the terminal device 40 may be capable of sidelink communication with another terminal device 40. The terminal device 40 may also be able to use an automatic retransmission technology such as HARQ when performing sidelink communication. Note that the terminal device 40 may also be capable of NOMA communication in communication (sidelink) with other terminal devices 40. In addition, the terminal device 40 may be capable of performing LPWA communication with another communication device (for example, the base station 20 and another terminal device 40). Further, the wireless communication used by the terminal device 40 may be wireless communication using millimeter waves. Note that the wireless communication (including sidelink communication) used by the terminal device 40 may be wireless communication using radio waves or wireless communication (optical wireless) using infrared rays or visible light.

In addition, the terminal device 40 may be a mobile device. The mobile device is a movable wireless communication device. At this time, the terminal device 40 may be a wireless communication device installed in a mobile object or may be a mobile object itself. For example, the terminal device 40 may be a vehicle that moves on a road such as an automobile, a bus, a truck, or a motorcycle, a vehicle that moves on a rail installed on a track such as a train, or a wireless communication device mounted on the vehicle. Note that the mobile object may be a mobile terminal, or may be a mobile object that moves on land (on the ground in a narrow sense), underground, on water, or under water. In addition, the mobile object may be a mobile object that moves inside the atmosphere, such as a drone or a helicopter, or may be a mobile object that moves outside the atmosphere, such as an artificial satellite.

The terminal device 40 may be simultaneously connected to a plurality of base stations or a plurality of cells to perform communication. For example, in a case where one base station supports a communication area via a plurality of cells (for example, pCell and sCell), it is possible to bundle the plurality of cells and communicate between the base station 20 and the terminal device 40 by a carrier aggregation (CA) technology, a dual connectivity (DC) technology, or a multi-connectivity (MC) technology. Alternatively, the terminal device 40 and the plurality of base stations 20 can communicate with each other by a coordinated transmission and reception (coordinated multipoint transmission and reception (CoMP)) technology via cells of different base station 20.

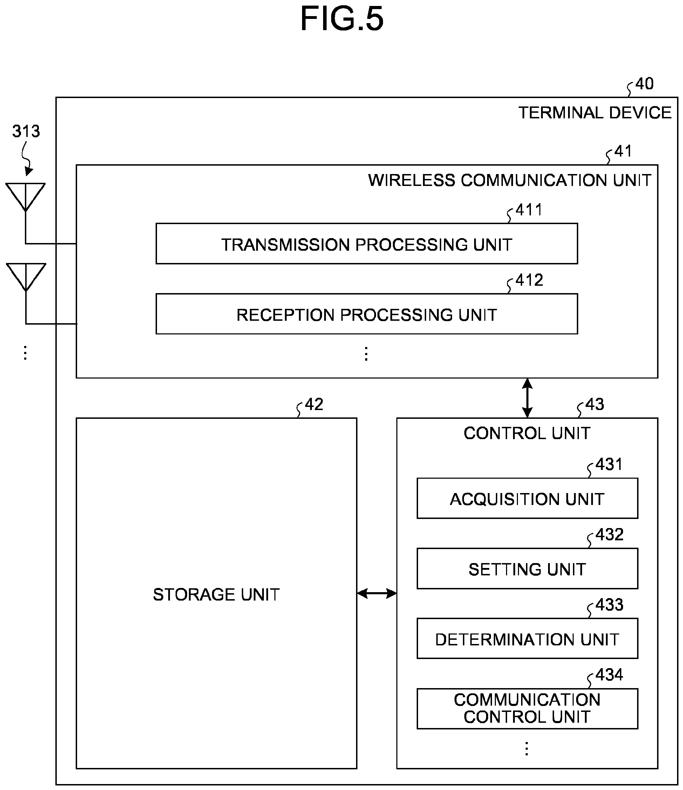

FIG. 5 is a diagram illustrating a configuration example of the terminal device 40 according to the embodiment of the present disclosure. The terminal device 40 includes a wireless communication unit 41, a storage unit 42, and a control unit 43. Note that the configuration illustrated in FIG. 5 is a functional configuration, and the hardware configuration may be different from the functional configuration. In addition, the functions of the terminal device 40 may be implemented in a distributed manner in a plurality of physically separated configurations.

The wireless communication unit 41 is a signal processing unit for wirelessly communicating with other wireless communication devices (for example, the base station 20, the relay station 30, and another terminal device 40). The wireless communication unit 41 operates under the control of the control unit 43. The wireless communication unit 41 includes a transmission processing unit 411, a reception processing unit 412, and an antenna 413. The configurations of the wireless communication unit 41, the transmission processing unit 411, the reception processing unit 412, and the antenna 413 may be similar to those of the wireless communication unit 21, the transmission processing unit 211, the reception processing unit 212, and the antenna 213 of the base station 20. In addition, the wireless communication unit 41 may be configured to be beamformable similarly to the wireless communication unit 21. Furthermore, similarly to the wireless communication unit 21, the wireless communication unit 41 may be configured to be able to transmit and receive spatially multiplexed signals.

The storage unit 42 is a storage device capable of reading and writing data, such as a DRAM, an SRAM, a flash memory, or a hard disk. The storage unit 42 functions as a storage means of the terminal device 40.

The control unit 43 is a controller that controls each unit of the terminal device 40. The control unit 43 is implemented by, for example, a processor such as a CPU or an MPU. For example, the control unit 43 is implemented by a processor executing various programs stored in a storage device inside the terminal device 40 using a RAM or the like as a work area. Note that the control unit 43 may be implemented by an integrated circuit such as an ASIC or an FPGA. Any of the CPU, the MPU, the ASIC, and the FPGA can be regarded as a controller. Furthermore, the control unit 43 may be implemented by a GPU in addition to or instead of the CPU.

The control unit 43 includes an acquisition unit 431, a setting unit 432, a determination unit 433, and a communication control unit 434. Each block (the acquisition unit 431 to the communication control unit 434) constituting the control unit 43 is a functional block indicating a function of the control unit 43. These functional blocks may be software blocks or hardware blocks. For example, each of the functional blocks described above may be one software module implemented by software (including microprograms), or may be one circuit block on a semiconductor chip (die). Of course, each functional block may be one processor or one integrated circuit. The control unit 43 may be configured by a functional unit different from the above-described functional block. A configuration method of the functional block is arbitrary. The operation of the control unit 43 may be the same as the operation of each block of the control unit 23 of the base station 20.

### <<Sidelink communication>>

While the configuration of the communication system 1 has been described above, sidelink communication will be described next before describing the operation of the communication system 1.

### <Outline of sidelink communication>

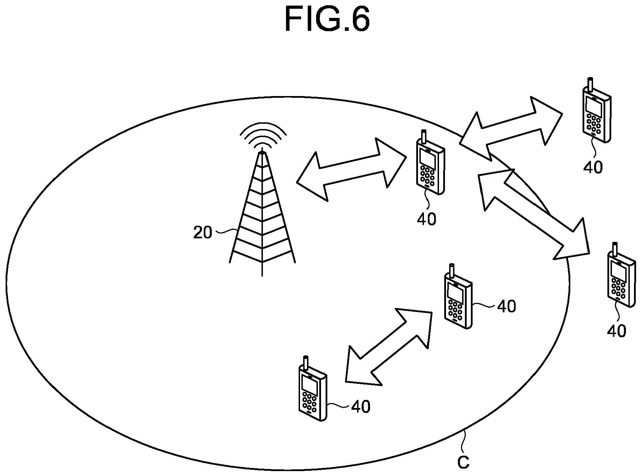

FIG. 6 is a diagram illustrating an outline of sidelink communication. Use cases of sidelink communication are roughly divided into two. The first is a case where two or more terminal devices 40 exist inside a cell C configured by the base station 20. The second is a case where at least one of the two or more terminal devices 40 exists inside the cell C and the other terminal device 40 exists outside the cell C. At this time, the terminal device 40 existing inside the cell C may communicate with the base station 20 in addition to the sidelink communication. Thus, the terminal device 40 existing inside the cell C functions as a relay station that relays the base station 20 and the terminal device 40 existing outside the cell C.

Note that, when the terminal device 40 is present inside the cell C, it can be said that the terminal device 40 is in a state in which the quality of the downlink signal received from the base station 20 is equal to or higher than a predetermined standard. In other words, when the terminal device 40 is present outside the cell C, it can be said that the terminal device 40 is in a state in which the quality of the downlink signal received from the base station 20 is equal to or less than the predetermined standard. In addition, when the terminal device 40 is present inside the cell C, it can also be said that the terminal device 40 is in a state in which the predetermined downlink channel received from the base station 20 can be decoded with a predetermined probability or more. In other words, when the terminal device 40 is present outside the cell C, it can be said that the terminal device 40 is in a state in which the predetermined downlink channel received from the base station 20 cannot be decoded with a predetermined probability or more.

### <Details of sidelink communication>

The sidelink communication is direct communication between the terminal device 40 and a terminal device 40 different from the terminal device 40. In the sidelink communication, a resource pool is set in the terminal device 40. The resource pool is a candidate of a time and frequency resource used to transmit and receive a sidelink. The terminal device 40 selects a resource for transmission and reception of the sidelink from the resource pool and performs sidelink communication. Since the sidelink communication is performed using uplink resources (an uplink subframe and an uplink component carrier), the resource pool is also set in the uplink subframe or the uplink component carrier.

A sidelink physical channel includes a physical sidelink control channel (PSCCH), a physical sidelink shared channel (PSSCH), a physical sidelink feedback channel (PSFCH), and the like.

The PSCCH is used to transmit sidelink control information (SCI). Mapping of information bits of the sidelink control information is defined as an SCI format. The sidelink control information includes a sidelink grant. The sidelink grant is used for scheduling PSSCH.

The PSSCH is used to transmit sidelink data (sidelink shared channel: SL-SCH). Note that the PSSCH may also be used to transmit control information of an upper layer.

The PSFCH is used to reply an HARQ response (ACK/NACK) to the PSSCH decoding result to the transmission device. The resource pool is set from the base station 20 to the terminal device 40 by the SIB or the dedicated RRC message. Alternatively, the resource pool is set by information regarding the resource pool preset in the terminal device 40. The resource pool of time is indicated by period information, offset information, and subframe bitmap information. The frequency resource pool is indicated by a start position of a resource block, an end position of the resource block, and the number of consecutive resource blocks.

### <Sidelink resource pool>

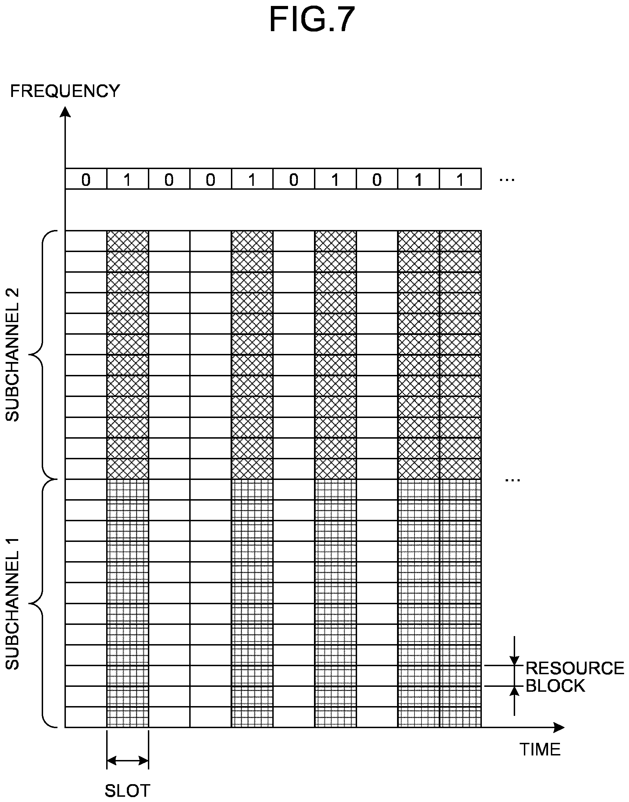

FIG. 7 is a diagram illustrating a resource pool of a sidelink. In the sidelink, the resource pool (sidelink resource pool) is set as resources used for transmission of PSSCH and reception of PSSCH. In the frequency axis, the resource pool includes one or more consecutive subchannels. A subchannel includes one or more consecutive physical resource blocks (PRBs). The number of subchannels and the size of the subchannels are set by higher layer parameters.

The slot set as the resource pool is indicated by a bitmap. Each bit of the bitmap corresponds to a slot that can be set as the resource pool of the sidelink. For example, when a value of a bit indicates 1, the corresponding slot is set as the resource pool, and when a value of a bit indicates 0, the corresponding slot is not set as the resource pool. The length of the bitmap is set by the upper layer.

A slot including an S-SS/PSBCH block is not set as the resource pool. Further, a slot that does not semi-statically include the predetermined number of uplink symbols is not set as the resource pool. In addition, a reserved slot is not set as the resource pool.

Note that the device that sets the resource pool may be a device other than the base station 20. Examples of the device other than the base station 20 include a representative terminal device 40 (primary terminal device or master terminal device).

### <Sidelink resource allocation scheme>

As a method of resource allocation to the sidelink, there are a resource allocation mode 1 (Sidelink Resource allocation mode 1) and a resource allocation mode 2 (Sidelink Resource allocation mode 2). The resource allocation mode 1 is a method in which the base station 20 allocates a resource for the terminal device 40 to transmit data on a sidelink physical channel (PSCCH or PSSCH). The resource allocation mode 2 is a method in which the terminal device 40 performs sensing and selects a resource for the terminal device 40 to transmit data on the sidelink physical channel. Hereinafter, these resource allocation modes will be described in detail.

### (1) Resource allocation mode 1

In the resource allocation mode 1, when a transmission packet is generated in the terminal device 40, the base station 20 selects and allocates a resource to be used for transmission of the packet from the resource pool.

In the resource allocation mode 1, a resource used for sidelink transmission is designated by dynamic grant or RRC signaling sent from the base station 20. Specifically, in the resource allocation mode 1, dynamic grant, configured grant type 1, and configured grant type 2 are supported for PSSCH transmission and PSCCH transmission. In the sidelink dynamic grant, PSSCH transmission is scheduled by DCI format 3_0. In the sidelink configured grant type 1, resources for PSSCH transmission are allocated by RRC signaling. In the sidelink configured grant type 2, the configured grant is activated by DCI format 3_0. Then, PSSCH transmission is performed using a resource designated by RRC signaling.

In the resource allocation mode 1, since resource allocation is performed by the base station 20 every time a transmission packet occurs, the contention frequency between sidelink communications can be reduced. On the other hand, much signaling overhead is necessary between the base station 20 and the terminal device 40.

### (2) Resource allocation mode 2

In the resource allocation mode 2, the resource pool is allocated to the terminal device 40 in advance. Alternatively, in the resource allocation mode 2, the resource pool is allocated by the base station 20/the network.

In the resource allocation mode 2, the terminal device 40 can select a sidelink resource in a resource selection window and reserve the future sidelink resource on the basis of a measurement result of an interference pattern in a sensing window and the reservation status of the sidelink resource in the sensing window. By using the prediction result, the terminal device 40 can select or reserve a sidelink resource available for transmission of the packet, that is, a sidelink resource predicted not to be used for transmission of another packet.

In the resource allocation mode 2, while signaling overheads between the base station 20 and the terminal device 40 are small, packet contention may occur.

The resource allocation mode 2 is classified into the following four types.
- Resource allocation mode 2(a)
- Resource allocation mode 2(b)
- Resource allocation mode 2(c)
- Resource allocation mode 2(d)

Hereinafter, the four types of resource allocation modes 2 will be described in detail.

### - Resource allocation mode 2(a)

In the resource allocation mode 2(a), when a packet is generated in the terminal device 40, the terminal device 40 autonomously selects a sidelink resource to be used for transmission of the packet from the resource pool. The terminal device 40 that transmits the packet first performs sensing to discover a sidelink resource to be used for transmission of the packet from the resource pool. Next, the terminal device 40 selects a sidelink resource from the resource pool on the basis of a result of the sensing. Then, the terminal device 40 transmits the packet using the selected sidelink resource. Furthermore, at this time, the terminal device 40 reserves a sidelink resource to be used for subsequent packet transmission as necessary. The resource allocation mode 2(a) can be applied to both a semi-sustainable method in which a resource is selected for a plurality of sidelink transmissions with different transport blocks and a dynamic method in which a resource is selected every time for a sidelink transmission of each transport.

### - Resource allocation mode 2(b)

In the resource allocation mode 2(b), the terminal device 40 assists selection of a sidelink resource of another transmission terminal.

### - Resource allocation mode 2(c)

In the resource allocation mode 2(c), a sidelink transmission pattern is set in the terminal device 40. The terminal device 40 selects a sidelink resource to be used for transmission according to the set sidelink transmission pattern. The sidelink transmission pattern is defined by sizes and positions of time and frequency resources and the number of resources. A plurality of sidelink transmission patterns can be set. In a case where only one sidelink transmission pattern is set, the terminal device 40 does not perform sensing. On the other hand, in a case where a plurality of sidelink transmission patterns is set, the terminal device 40 performs sensing and selects a sidelink transmission pattern on the basis of a sensing result. In out-of-coverage operation, one or more sidelink transmission patterns defined in each sidelink resource pool are set in advance. Furthermore, in the in-coverage operation, one or more sidelink transmission patterns defined in each sidelink resource pool are set from the base station 20.

### - Resource allocation mode 2(d)

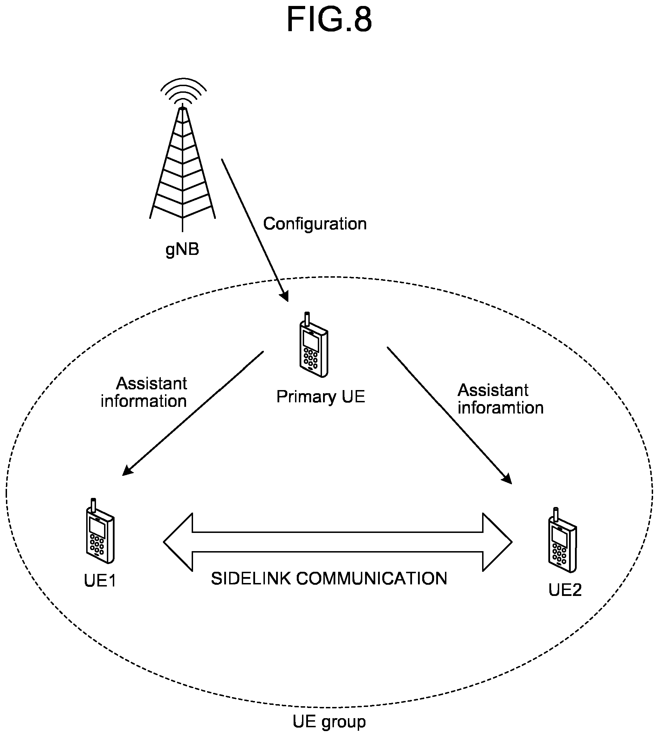

The resource allocation mode 2(d) is applied in group-based sidelink communication including three or more terminal devices 40. FIG. 8 is a diagram for explaining the resource allocation mode 2(d). In the group, a representative terminal device 40 (master terminal device or primary terminal device) is defined. The representative terminal device 40 reports information of the other terminal devices 40 (a slave terminal device, a secondary terminal device, and a member terminal device) in the group to the base station 20. The base station 20 provides resource pool setting and resource setting of each terminal device 40 in the group via the representative terminal device 40. In the resource allocation mode 2(d), the member terminal device 40 does not need to be directly connected to the base station 20, and thus the signal overhead of a Uu link (communication link between the base station 20 and the terminal device 40) can be reduced. The terminal device 40 that can be the representative terminal device 40 and the function that can be provided are determined depending on the capability of the terminal device 40. The representative terminal device 40 can provide predetermined assistance information to the member terminal device 40. Examples of the assistance information include the resource pool setting, information regarding contention, COT sharing information, CSI, and information regarding the degree of congestion.

### <Sensing in sidelink>

In the resource allocation mode 2, a sensing procedure is supported. SCI decoding from another terminal device 40 and/or measurement of a sidelink resource are used as sensing in the sidelink.

In the sensing by the SCI decoding, the terminal device 40 acquires information of the sidelink resource scheduled to be used included in the SCI transmitted from the another terminal device 40. On the basis of the SCI information, the terminal device 40 determines a sidelink resource to be used for transmission while avoiding a resource scheduled to be used by the another terminal device 40.

In the sensing by the measurement of the sidelink resource, the terminal device 40 performs L1 (Layer 1) sidelink reference signal received power (RSRP) measurement on the basis of sidelink demodulation RS (DMRS). When the measured RSRP is higher than the predetermined threshold, the terminal device 40 recognizes that the measured sidelink resource is used for transmission by the another terminal device 40, and determines the sidelink resource to be used for transmission while avoiding the sidelink resource.

In this manner, the terminal device 40 selects or reselects the sidelink resource on the basis of the result of the sensing procedure described above.

### <<Use of unlicensed band>>

While the sidelink communication has been described above, use of the unlicensed band will be described next.

### <Channel access of unlicensed channel>

To use an unlicensed channel, a wireless device (for example, the base station 20 or the terminal device 40) needs to perform channel access (channel access, medium access, or listen before talk) before transmitting a signal. Note that the unlicensed channel is a unit of a frequency band in which channel access is performed. The channel may also be expressed as a carrier, a frequency carrier, a component carrier, a cell, a frequency band, an LBT band, or the like.

In channel access, the wireless device performs a power measurement (it is also referred to as carrier sense, sensing, and clear channel assessment (CCA)) of the channel and compares the measured power value of the channel with a power detection threshold (energy detection threshold). When the measured power value of the channel is lower than the power detection threshold, the channel is determined as clear, and when the measured power value of the channel is higher than the power detection threshold, the channel is determined as busy. When the channel is determined to be clear in all sensing slots, the wireless device can acquire a transmission right for the channel and transmit a signal. The transmission right of the channel can be rephrased as TxOP, transmission opportunity, COT, or channel occupancy time. In the following description, acquisition of the transmission right of a channel may be referred to as acquisition of the channel.

The acquired channel may be utilized for transmission of other wireless devices. In this case, a grant is sent from the wireless device that has acquired the channel to other wireless devices. The wireless device that acquires the channel may be referred to as an initiating device. A wireless device that uses a channel acquired by another wireless device may be referred to as a responding device.

In 3GPP, four types of LBT categories have been defined. In the channel access, LBT corresponding to one of the following LBT categories is performed.
- LBT Category 1 (Cat 1 LBT)
- LBT Category 2 (Cat 2 LBT)
- LBT Category 3 (Cat 3 LBT)
- LBT Category 4 (Cat 4 LBT)

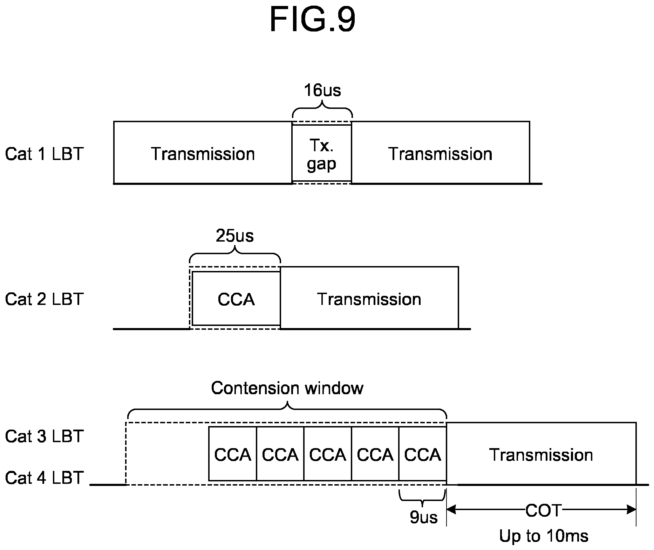

FIG. 9 is a diagram for describing the four types of LBT categories. The LBT category 1 (Cat 1 LBT) is a category without LBT. In the LBT category 1, a gap is provided between transmission. The LBT category 2 (Cat 2 LBT) is a category in which random backoff is not performed. The LBT category 3 (Cat 3 LBT) is a category in which random backoff by a fixed-size contention window is performed. The LBT category 4 (Cat 4 LBT) is a category in which random backoff by a variable-size contention window is performed.

### <Channel access procedure of unlicensed channel>

A channel access procedure is performed to access an unlicensed channel on which transmission is performed in the base station 20 or the terminal device 40. The channel access can be rephrased as medium access or listen before talk (LBT).

In a channel access procedure of load-based equipment (LBE), sensing of a channel is performed once or a plurality of times. On the basis of the sensing result, it is determined whether the channel is idle (it is also referred to as unoccupied, available, or enable) or busy (it is also referred to as "occupied", "unavailable", or "disable") (vacancy determination). In the sensing of the channel, power of a channel in a predetermined waiting time is sensed. The "channel access/channel access procedure of the load-based device" described above can be rephrased as a channel access procedure in dynamic channel access or dynamic channel occupancy.

Examples of the waiting time of the channel access procedure include a first waiting time (slot), a second waiting time, a third waiting time (defer period), and a fourth waiting time.

A slot is a unit of a waiting time of the base station 20 and the terminal device 40 in the channel access procedure. The slot is defined as, for example, 9 microseconds.

In the second waiting time, one slot is inserted at the head. The second waiting time is defined as, for example, 16 microseconds.

The defer period includes the second waiting time and a plurality of consecutive slots following the second waiting time. The number of consecutive slots following the second waiting time is determined on the basis of a priority class (channel access priority class) used to satisfy the QoS.

The fourth waiting time includes the second waiting time and one subsequent slot. The fourth waiting time is defined as, for example, 25 microseconds.

The base station 20 or the terminal device 40 senses a predetermined channel during a period of a predetermined slot. When power detected by the base station 20 or the terminal device 40 for at least 4 microseconds within the predetermined slot period is smaller than a predetermined power detection threshold, the predetermined slot is considered to be idle. On the other hand, when the power is larger than the predetermined power detection threshold, the predetermined slot is considered to be busy.

The channel access procedure includes a first channel access procedure, a second channel access procedure, and a third channel access procedure. The first channel access procedure is performed by using a plurality of slots and a defer period. The second channel access procedure is performed by using one second waiting time or fourth waiting time. The third channel access procedure is performed by using the second waiting time.

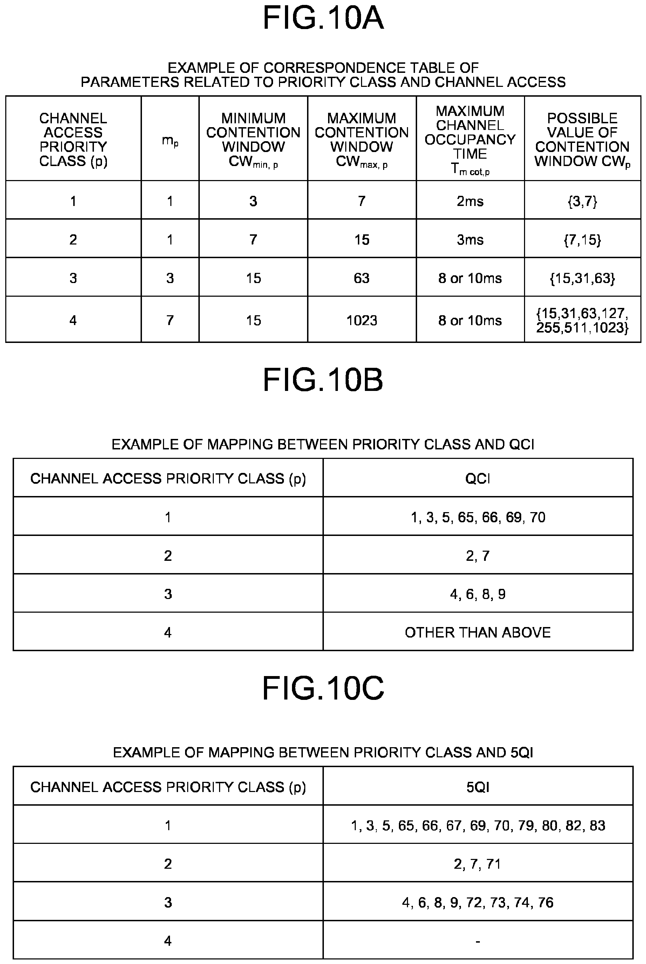

Parameters related to the channel access are determined on the basis of the priority class. The parameters related to the channel access include, for example, a minimum contention window, a maximum contention window, a maximum channel occupancy time, a possible value of the contention window, and the like. The priority class is determined by a value of a QoS class identifier (QCI) or a 5G QoS identifier (5QI) that processes quality of service (QoS). FIG. 10A is a diagram illustrating an example of a correspondence table of a priority class and parameters related to channel access. FIG. 10B is a diagram illustrating an example of mapping between the priority class and the QCI. FIG. 10C is a diagram illustrating an example of mapping between the priority class and the 5QI.

### <Details of first channel access procedure>

The first channel access procedure (type 1 channel access procedure) is classified into the LBT category 3 or the LBT category 4. In the first channel access procedure, the following procedure is performed.

### Step (0):

Channel sensing is performed during the defer period. When the channel is idle in a slot within the defer period, the communications device advances the processing to step (1), or otherwise advances the processing to step (6).

### Step (1):

The communication device acquires an initial value of the counter. A possible value of the initial value of the counter is an integer between 0 and the contention window CW. The initial value of the counter is randomly determined according to a uniform distribution. The communication device sets an initial value of the counter to the counter N, and advances the processing to step (2).

### Step (2):

When the counter N is larger than 0 and it is selected to subtract the counter N, the communication device subtracts 1 from the counter N. Thereafter, the communication device advances the processing to step (3).

### Step (3):

The communication device adds a slot period and stands by. Furthermore, in the additional slot, the communication device executes channel sensing. When the additional slot is idle, the communication device advances the processing to step (4), or otherwise advances the processing to step (5) .

### Step (4):

When the counter N is 0, the communication device stops this procedure. Otherwise, the communication device advances the processing to step (2).

### Step (5):

The communication device adds the defer period and stands by. Further, the communication device performs channel sensing until busy is detected in any one slot included in the additional defer period, or it can be detected that all slots included in the additional defer period are idle. Thereafter, the communication device advances the processing to step (6).

### Step (6):

When it is sensed that the channel is idle in all of the slots included in the additional defer period, the communication device returns the processing to step (4), or otherwise returns the processing to step (5).

After stopping step (4), the communication device performs transmission including data such as the PDSCH and the PUSCH on the channel.

Note that, after step (4) is stopped, transmission may not be performed in the channel. In this case, thereafter, when the channel is idle in all of the slots and the defer period immediately before transmission, the communication device may perform transmission without executing the above procedure. On the other hand, when the channel is not idle in any of the slots and the defer period thereof, the communication device returns the processing to step (1) after it is sensed that the channel is idle in all of the slots within the additional defer period.

### <Details of second channel access procedure>

The second channel access procedure (type 2 channel access procedure) is classified into LBT category 2. In the second channel access procedure, transmission may be performed immediately after the channel is considered to be idle as a result of sensing at least the second waiting time or the fourth waiting time. On the other hand, when it is determined that the channel is not idle as a result of sensing at least the second waiting time or the fourth waiting time, no transmission is performed. The second channel access procedure is applied when the transmission interval is 16 microseconds or 25 microseconds.

The second channel access procedure using the fourth waiting time is referred to as a type 2A channel access procedure, and the second channel access procedure using the second waiting time is referred to as a type 2B channel access procedure.

### <Details of third channel access procedure>

The third channel access procedure (type 2C channel access procedure) is classified into LBT category 1. In the third channel access procedure, the channel is not sensed before transmission. The third channel access procedure is applied when the transmission interval is within 16 microseconds.

### <Contention window adaptation procedure>

In the LBT category 4, a contention window adaptation procedure is performed.

A contention window (contention window) CW used in the first channel access procedure is determined on the basis of a contention window adaptation procedure. The value of the contention window CW is held for each priority class. In addition, the contention window CW takes a value between a minimum contention window and a maximum contention window. The minimum contention window and the maximum contention window are determined on the basis of the priority class.

The adjustment of the value of the contention window CW is performed before step (1) of the first channel access procedure. When the proportion of NACKs in an HARQ response corresponding to the shared channel of a reference HARQ process in at least a reference subframe (reference slot or reference period) of the contention window adaptation procedure is higher than a threshold, the value of the contention window CW is increased, or otherwise, the value of the contention window CW is set to the value of the minimum contention window. For example, 90% is set as the threshold. The value of the contention window CW is increased, for example, on the basis of the following equation: CW = 2 . (CW + 1) - 1.

The reference period is defined as from the head of the occupied channel to the end of the first slot containing the at least one unicast PDSCH or to the end of the first transmission burst containing the at least one unicast PDSCH.

### <Details of channel access procedure in downlink>

When performing downlink transmission including a PDSCH, a PDCCH, and/or an enhanced PDCCH (EPDCCH) in the unlicensed channel, the base station 20 accesses the channel on the basis of the first channel access procedure and performs the downlink transmission.

On the other hand, when performing downlink transmission including a discovery RS (DRS) or a discovery signal (DS) but not including a PDSCH in the unlicensed channel, the base station 20 accesses the channel on the basis of the second channel access procedure and performs the downlink transmission. Note that the period of the downlink transmission is preferably shorter than 1 millisecond.

### <Details of channel access procedure in uplink>

In the unlicensed channel, when it is instructed to perform the first channel access procedure with an uplink grant for scheduling the PUSCH, the terminal device 40 performs the first channel access procedure before uplink transmission including the PUSCH.

In addition, in a case where it is instructed to perform the second channel access procedure with the uplink grant for scheduling the PUSCH, the terminal device 40 performs the second channel access procedure before the uplink transmission including the PUSCH.

In addition, with respect to uplink transmission that does not include the PUSCH but includes the SRS, the terminal device 40 performs the second channel access procedure before the uplink transmission.

Furthermore, in a case where the end of the uplink transmission indicated by the uplink grant is within an uplink duration (UL duration), the terminal device 40 performs the second channel access procedure before the uplink transmission regardless of the procedure type indicated by the uplink grant.

In addition, in a case where the uplink transmission continues after the fourth waiting time after the end of the downlink transmission from the base station, the terminal device 40 performs the second channel access procedure before the uplink transmission.

### <NR channel access procedure>

In the channel access procedure on the unlicensed channel using NR, the communication device (transmitting station) can perform non-beamformed channel sensing and beamformed channel sensing.

The non-beamformed channel sensing is channel sensing by reception whose directivity is not controlled, or channel sensing having no direction information. The channel sensing having no direction information is, for example, channel sensing obtained by averaging measurement results in all directions. The communication device may not recognize the directivity (angle and direction) used in the channel sensing.

The beamformed channel sensing is channel sensing by directivity controlled reception or channel sensing having direction information. That is, it is channel sensing in which the reception beam is directed in a predetermined direction. A communication device having a function of performing beamformed channel sensing can perform channel sensing one or more times using different directivities.

By performing beam-formed channel sensing, an area detected by sensing is narrowed. Thus, the communication device can reduce the frequency of detecting a communication link that does not cause interference, and reduce the exposed node problem.

### <Channel access of frame based equipment (FBE)>

In a channel access procedure of frame based equipment (FBE), sensing of a channel is performed once before transmission. On the basis of the sensing result, it is determined whether the channel is idle (idle, unoccupied, available, or enable) or busy (busy, occupied, unavailable, or disable) (vacancy determination). In the sensing of the channel, power of a channel in a predetermined waiting time is sensed. Note that the "channel access/channel access procedure of the frame based equipment" described above can be rephrased as a channel access procedure in semi-static channel access or semi-static channel occupancy. Furthermore, the above-described "channel access" can be rephrased as listen before talk (LBT).

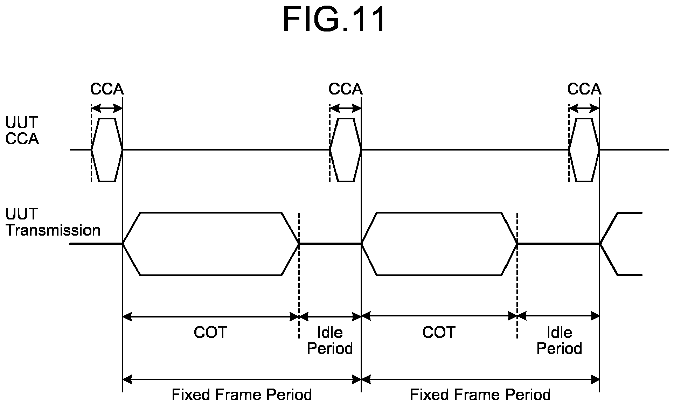

FIG. 11 is a diagram illustrating a frame-based configuration of the frame based equipment. The transmission and/or reception configuration used for the frame based equipment has a periodic timing referred to as a fixed frame period.

The fixed frame period is set in channel access of the frame based equipment. The fixed frame period is set between 1 millisecond and 10 milliseconds. The fixed frame period can be changed only once in 200 milliseconds.

In the channel access of the frame based equipment, sensing of a channel is performed immediately before starting transmission from the head of the fixed frame period. The equipment performs sensing once using one slot having 9 microseconds or less. As a result of sensing the channel, when the power value is greater than a predetermined power detection threshold, the channel is considered busy. On the other hand, when the power value is less than the predetermined power detection threshold, the channel is clear and the device can transmit. The device may transmit during a channel occupancy time (COT). The device can perform a plurality of transmissions without performing sensing if the gap between multiple transmissions is equal to or less than 16 microseconds within the channel occupancy time. On the other hand, when the gap between multiple transmissions exceeds 16 microseconds, the device needs to perform additional channel sensing. The additional channel sensing is similarly performed once using one slot.

The channel occupancy time in channel access of the frame based equipment does not exceed 95% of the fixed frame period. An idle period (Idle Period) in channel access of the frame based equipment is equal to or more than 5% of the fixed frame period. Note that the idle period is equal to or more than 100 microseconds.

The transmission of the response (ACK/NACK, HARQ-ACK) to the transmission from the device may be performed within the channel occupancy time.

### <Channel occupancy time (COT)>

In an unlicensed band operation, a wireless communication device (hereinafter referred to as a communication device) performs LBT before signal transmission. When it is determined that the channel is clear as a result of the LBT, the channel can be occupied for a predetermined time. A predetermined time during which a channel can be occupied after the LBT is referred to as a channel occupancy time (COT). In the LBE, the COT is defined to fall within the maximum channel occupancy time (Maximum COT) defined in the table in FIG. 10A. In the FBE, the COT is defined to fall within 95% of the fixed frame period. The COT acquired by the communication device may be used for transmission of a reception-side communication device (hereinafter referred to as a reception device). Transmission of a signal by a communication device (responding device) different from the communication device (initiating device) that has acquired the COT using the COT is referred to as COT sharing. When the COT is shared, other communication devices also need to recognize the COT and the COT length.

The COT length of the COT (hereinafter referred to as a base station start COT or a base station acquisition COT) acquired by the base station 20 is notified to the terminal device 40 using the DCI format 2_0. The terminal device 40 recognizes the length of the base station start COT on the basis of the COT length indicator included in the DCI format 2_0.

In addition, the terminal device 40 can implicitly recognize the COT from the PDSCH scheduling from the base station 20. In addition, the terminal device 40 can implicitly recognize the COT from a downlink physical signal (DMRS for SS/PBCH Block, CSI-RS, PDCCH) from the base station 20.

The COT length of the COT (hereinafter referred to as a terminal device start COT or a terminal device acquisition COT) acquired by the terminal device 40 is notified to the base station 20 using CG-UCI. The base station 20 recognizes the length of the terminal device 40 start COT on the basis of the COT sharing information included in the CG-UCI.

### <Channel access procedure of 3rd device start COT>

In the unlicensed band, generally, a transmission side communication device (hereinafter referred to as a transmission device) acquires the COT. However, the reception device can acquire the COT and share the acquired COT with the transmission device. On the other hand, it is also assumed that a third party communication device (hereinafter referred to as a 3rd device) which is neither the transmission device nor the reception device acquires the COT and shares the acquired COT with the transmission device and the reception device. The channel access procedure of the 3rd device start COT (3rd device acquisition COT) is a channel access procedure effective for reducing processing and reducing power consumption of the wireless communication device because the transmission device and the reception device do not need to perform channel access.

The 3rd device is a communication device corresponding to one or more definitions below.
- The 3rd device is a communication device that is not directly involved in transmission and reception of communication.
- The 3rd device is a communication device that does not transmit and receive data in a link (uplink, downlink, or sidelink) between two or more other communication devices.
- The 3rd device is a communication device that provides predetermined control information (for example, assistance information) for a link between two or more other communication devices to the one or more communication devices.

The 3rd device may be the base station 20 or the terminal device 40. The 3rd device is preferably a communication device that controls two or more other communication devices. As a representative example of the 3rd device, a base station, a primary terminal device, and a master terminal device are assumed.

The 3rd device start COT may be shared by another base station 20 or may be shared by the terminal device 40. The 3rd device start COT may be used for downlink simultaneous transmission (Coordinated Multi-point transmission: CoMP, multi-TRP transmission) of a plurality of base stations 20, or may be used for sidelink communication between two or more terminal devices 40.

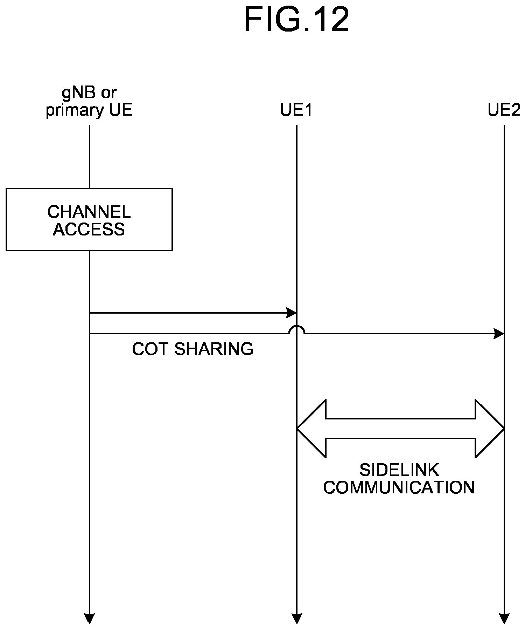

FIG. 12 is an example of a procedure for sharing a COT acquired by the 3rd device. The 3rd device (for example, the base station, the primary terminal device, or the master terminal device) that is not involved in sidelink communication performs channel access and acquires the COT before the sidelink communication between UE1 and UE2. UE1 and UE2 are, for example, terminal devices 40. After acquiring the COT, the 3rd device sends, in downlink or sidelink, information indicating COT sharing to UE1 and/or UE2. Upon receiving the COT sharing information, UE1 and/or UE2 perform sidelink communication in the shared COT.

In sharing the 3rd device start COT, limitations may be imposed on communicable communication and communication devices. As examples of limitations, the following examples are conceivable.

### Limitation example 1

The terminal device 40 that can share the COT is determined by the positional relationship between the 3rd device that has acquired the COT and the terminal device 40 that performs sidelink communication. For example, the terminal device 40 that can perform the sidelink communication using the COT acquired by the 3rd device is the terminal device 40 existing within a predetermined range from the 3rd device. The terminal device 40 existing within the predetermined range is at least the transmission device.

### Limitation example 2

The terminal device 40 that can share the COT is determined by reception power received by the terminal device 40 that performs the sidelink communication from the 3rd device that has acquired the COT. For example, RSRP and RSSI are referred to as the reception power. For example, the terminal device 40 in which the reception power of the signal from the 3rd device that has acquired the COT is higher than a predetermined value may perform the sidelink communication using the COT acquired by the 3rd device.

### Limitation example 3

The terminal devices 40 that can share the COT with the 3rd device are only member terminals belonging to the same terminal device group. The terminal device 40 belonging to the terminal device group may be set from the base station 20, may be set on the basis of a zone, or may be a terminal device that receives data sent by groupcast.

### Limitation example 4

The terminal devices 40 that can share the COT with the 3rd device are only the terminal devices 40 existing in the same zone. A zone (geographic zone) is an area calculated from geographic coordinates. In a case where two terminal devices 40 exist in the same zone, it can be considered that the two terminal devices 40 are located within a predetermined distance.

### Limitation example 5

The terminal device 40 that can share the COT with the 3rd device is only the terminal device 40 connected (camped) to the same cell (base station 20). For example, in a case where the terminal device 40 and the terminal device 40 to be a communication partner in the sidelink communication with this terminal device 40 are connected to the same base station 20, the terminal devices 40 share the COT with the base station 20 for the sidelink communication.

### Limitation example 6

The maximum length of the COT may be limited. Specifically, the maximum communicable time on the COT shared by the 3rd device may be limited to be shorter than the maximum length of the acquired COT.

### Limitation example 7

The physical signal, the physical channel, the data transmission type, and/or the data type (for example, the packet type) that can be transmitted through the COT sharing are limited. As a specific example, the physical channel that can be transmitted through the COT sharing from the 3rd device is a physical channel that carries control information (SCI, HARQ-ACK) such as PSSCH and/or PSFCH. As another specific example, the type of data transmission that can be transmitted through the COT sharing from the 3rd device is broadcast or groupcast. As another specific example, the type of data that can be transmitted through the COT sharing from the 3rd device is data indicated as high priority by physical layer (L1, layer 1) priority.

### Limitation example 8

When the COT is shared from the 3rd device, the transmission power of the sidelink communication may be limited. For example, the upper limit of the transmission power of the sidelink communication when the COT is shared from the 3rd device is lower than the upper limit of the transmission power of the sidelink communication when the terminal device acquires the COT. The upper limit of the transmission power of the sidelink communication when the COT is shared from the 3rd device is instructed from the 3rd device by the control information (DCI, SCI) including the RRC signaling or the COT sharing information. As a specific example of the upper limit of the transmission power of the sidelink communication, the transmission power assumed in power detection when the COT is acquired is the upper limit.

Note that the terminal device 40 according to the above limitation is a transmission terminal that transmits information at least on the sidelink. Note that the above limitations may be further applied to a reception terminal (unicast reception terminal or groupcas reception terminal).

Note that the above limitations may be applied by combining one or more of them.

### <<Operation of communication system>>

Although the use of the unlicensed band has been described above, the operation of the communication system 1 will be described below.

The operation of the communication system 1 is divided into a first pattern in which the COT is acquired after the resource pool is set, a second pattern in which the resource pool is set after the COT is acquired, and a third pattern in which the COT is acquired after the transmission resource is determined. Hereinafter, a first pattern will be described in a first embodiment, a second pattern will be described in a second embodiment, and a third pattern will be described in a third embodiment.

In the following description, the terminal device 40 that becomes the transmission side in the sidelink communication may be referred to as a transmission device or a Tx UE. Furthermore, the terminal device 40 that becomes the reception side in the sidelink communication may be referred to as a reception device or an Rx UE.

### <First embodiment>

First, the first pattern will be described.

In the first embodiment, the transmission device sets the resource pool on the basis of initial setting or on the basis of information from the base station 20. Then, after setting the resource pool, the transmission device acquires the COT before selecting a resource from the resource pool. Thereafter, the transmission device determines a valid resource from the resource pool on the basis of information of a period (hereinafter referred to as a COT period or a COT length) from the start of the COT to the end of the COT.

In the first embodiment, first, the resource pool is semi-statically set. The resource pool is set with a period of several tens of slots by a bitmap, for example. The terminal device 40 that performs the sidelink communication recognizes that the set resource pool is valid in the COT period. The terminal device 40 performs the sidelink communication using a resource whose time is included in the COT period among resources included in the resource pool. On the other hand, the terminal device 40 that performs the sidelink communication recognizes that the set resource pool is invalid in the period outside the COT. The terminal device 40 excludes a resource whose time is not included in the COT period among the resources included in the resource pool from selection candidates of the resource to be used for the sidelink communication.

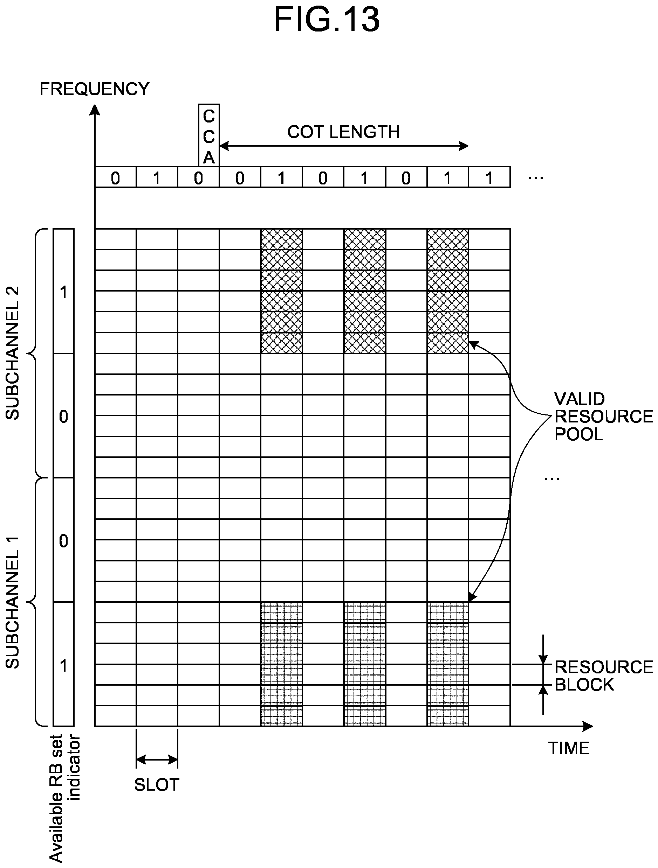

FIG. 13 is a diagram illustrating an example of activation/deactivation of resources included in the resource pool by the COT. First, the terminal device 40 sets a resource pool on the basis of initial setting or information acquired from the base station 20. In the example of FIG. 13, the resource pool setting in a time axis direction and the resource pool setting in a frequency axis direction are each designated by a bitmap. 1 is valid and 0 is invalid. In the resource pool setting in the time axis direction, a slot used as the resource pool is indicated. On the other hand, in the resource pool setting in the frequency axis direction, a subchannel and/or a resource block used as the resource pool is indicated.

The resources valid on the time axis are, for example, all slots included in the COT period among the slots validated in the resource pool setting in the time axis direction. In other words, a slot that is not partially included in the COT period is not a valid resource.

Note that, for the terminal device 40 capable of the sidelink communication in a mini-slot (a slot including only a part of the slot, and includes, for example, two symbols, four symbols, or seven symbols), the mini-slot is a valid resource when the entire mini-slot is included in the COT period.

Furthermore, the resource valid on the frequency axis is, for example, a resource block validated by an available RB set indicator among subchannels validated by the resource pool setting in the frequency axis direction. In other words, resource blocks that are not validated by the available RB set indicator are not used for the sidelink communication, and only some resource blocks indicated to be valid among the subchannels are used for the sidelink communication.

Alternatively, the resource valid on the frequency axis is, for example, a subchannel in which all resource blocks are validated by the available RB set indicator among the subchannels validated by the resource pool setting in the frequency axis direction. In other words, when the resource block is not valid even in a part of the subchannel, the subchannel is not used for the sidelink communication.

Some sequence examples of the first embodiment will be described below.

### <Sequence example in case where COT acquirer is transmission device>

First, a sequence example in a case where the COT acquirer is the transmission device will be described.

In a case where the COT acquirer is the transmission device, a period from the COT acquisition timing to the maximum COT duration is the valid period of the resource pool. In a case where the COT acquirer is the transmission device, the transmission device performs channel access to acquire a COT.

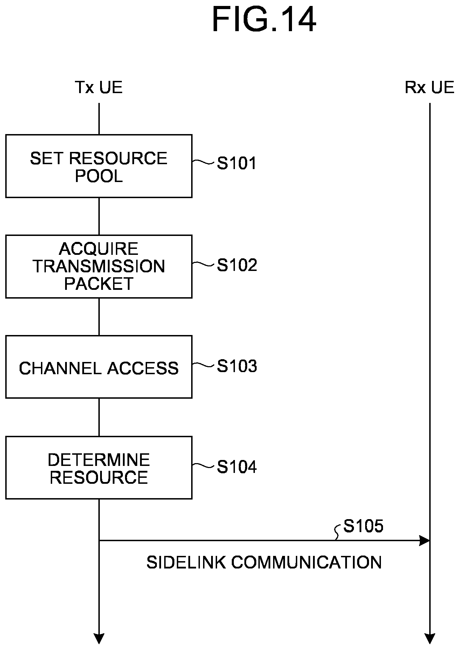

FIG. 14 is a diagram illustrating an example of a resource pool determination sequence in a case where the COT acquirer is the transmission device. In the drawing, Tx UE is the terminal device 40 (transmission device) that becomes the transmission side in the sidelink communication. Rx UE is the terminal device 40 (reception device) that becomes the reception side in the sidelink communication.

First, the setting unit 432 of the transmission device sets a resource pool (Step S101). At this time, the setting unit 432 of the transmission device may set the resource pool on the basis of the initial setting, or may set the resource pool on the basis of the information for resource pool setting acquired from the base station 20.

Next, the acquisition unit 431 of the transmission device acquires a transmission packet (Step S102). Thereafter, the communication control unit 434 of the transmission device attempts channel access (Step S103). When the channel access succeeds, the acquisition unit 431 of the transmission device acquires information of the COT (information of channel occupancy time).

When the COT can be acquired, the determination unit 433 of the transmission device determines a resource to be used for sidelink transmission (Step S104). At this time, the determination unit 433 of the transmission device excludes a resource whose time is not included in the COT period from the resource pool from the selection candidates, and selects a resource to be used for the sidelink communication from the remaining resources of the resource pool (Step S104). Then, the communication control unit 434 of the transmission device performs sidelink communication using the determined resource (Step S105).

### <Sequence example in case where COT acquirer is other than transmission device>

Next, a sequence example in a case where the COT acquirer is other than the transmission device will be described.

When the COT acquirer is other than the sidelink transmission device, the transmission device needs to acquire information designating the COT period (information of channel occupancy time) from another communication device. The transmission device recognizes the valid period of the resource pool from the designated COT period, and selects the resource to be used for the sidelink communication.

### (Case 1-1)

As a case where a communication device other than the transmission device is the COT acquirer, there is a case where a reception device is the COT acquirer.

As a specific example of a case where the reception device is the COT acquirer, there is a case where the reception device first acquires a COT as a terminal device that transmits data, and then shares the remaining COT with the transmission device. More specifically, in addition to the case of transmitting the sidelink data from the transmission device, for example, a case of transmitting feedback of HARQ-ACK to PSSCH transmitted from the reception device, a case of transmitting CSI, and the like are exemplified.

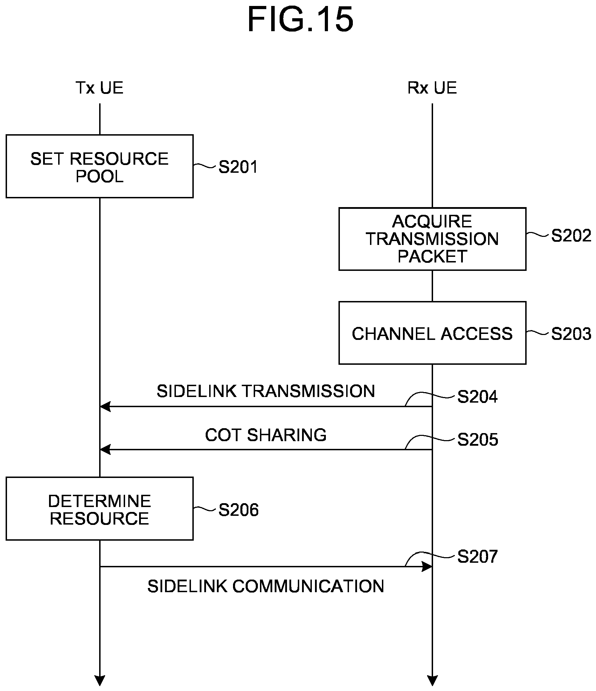

FIG. 15 is a diagram illustrating an example of a transmission resource determination sequence in a case where the COT acquirer is the reception device. In the drawing, Tx UE is the terminal device 40 (transmission device) that becomes the transmission side in the sidelink communication (Step S207 illustrated in FIG. 15). Rx UE is the terminal device 40 (reception device) that becomes the reception side in the sidelink communication (Step S207 illustrated in FIG. 15).

First, the setting unit 432 of the transmission device sets a resource pool (Step S201). At this time, the setting unit 432 of the transmission device may set the resource pool on the basis of the initial setting, or may set the resource pool on the basis of the information for resource pool setting acquired from the base station 20.

Next, the acquisition unit 431 of the reception device acquires a transmission packet (Step S202). Upon acquiring the transmission packet, the acquisition unit 431 of the reception device performs channel access to acquire the COT (Step S203). Then, the reception device performs sidelink transmission (Step S204). The reception device permits the transmission device to use the remaining COT via the COT sharing information during or after the sidelink transmission (Step S205). The acquisition unit 431 of the transmission device acquires the COT sharing information from the reception device. The transmission device specifies the channel occupancy time (COT) based on the COT sharing information.

Here, a method of transmitting the COT sharing information provided from another terminal device 40 through sidelink communication will be described. Note that this transmission method can also be used in other embodiments.

For example, the COT sharing information provided from the another terminal device 40 may be included in the SCI. At this time, the COT sharing information is preferably included in the SCI (for example, SCI format 1-A) included in the PSCCH. Note that the COT sharing information may be included in SCI (for example, SCI format 2-A and SCI format 2-B) included in the PSSCH.

Furthermore, for example, the COT sharing information provided from the another terminal device 40 through the sidelink communication can be transmitted through the physical sidelink feedback channel (PSFCH) or a sidelink channel having a configuration similar to that of the PSFCH. The PSFCH may be mapped on the last symbol and/or the penultimate symbol of a predetermined slot. For example, the COT sharing information transmitted through the PSFCH is 1-bit information, and indicates whether or not the COT can be acquired for a predetermined resource. The predetermined resource can be determined in association with the resource on which the PSFCH is transmitted.

Furthermore, for example, the COT sharing information provided from the another terminal device 40 through the sidelink communication can be transmitted through MAC layer signaling or RRC layer signaling. In this case, the COT sharing information may be included in the PSSCH.

In addition, for example, the method of transmitting the COT sharing information provided from the another terminal device 40 through the sidelink communication may be determined, defined, or changed according to the cast type (that is, unicast, groupcast, or broadcast) of the sidelink communication. For example, only when the sidelink communication is unicast, the COT sharing information can be transmitted through the sidelink communication.

The determination unit 433 of the transmission device determines a sidelink transmission resource on the basis of the information of the COT specified by the COT sharing information (Step S206). Then, the communication control unit 434 of the transmission device performs sidelink communication using the determined resource (Step S207) .

### (Case 1-2)

As a specific example of another case where the reception device is the COT acquirer, there is a case where the transmission device requests the reception device to acquire the COT. This case is effective when the transmission device does not have a function of channel access (channel access capability). For example, this case is effective when the transmission device is a device requiring low power consumption, such as a wearable device.

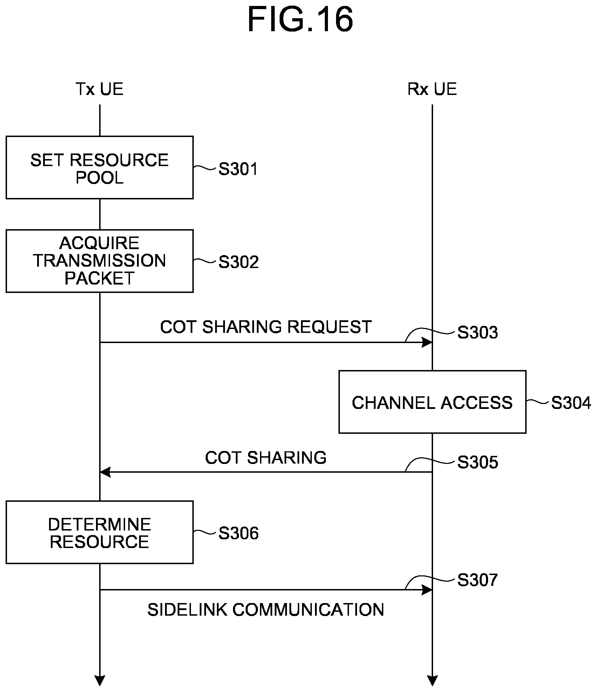

FIG. 16 is a diagram illustrating another example of the transmission resource determination sequence in a case where the COT acquirer is the reception device. In the drawing, Tx UE is the terminal device 40 (transmission device) that becomes the transmission side in the sidelink communication (Step S307 illustrated in FIG. 16). Rx UE is the terminal device 40 (reception device) that becomes the reception side in the sidelink communication (Step S307 illustrated in FIG. 16).

First, the setting unit 432 of the transmission device sets a resource pool (Step S301). At this time, the setting unit 432 of the transmission device may set the resource pool on the basis of the initial setting, or may set the resource pool on the basis of the information for resource pool setting acquired from the base station 20.

Next, the acquisition unit 431 of the transmission device acquires a transmission packet (Step S302). Upon acquiring the transmission packet, the communication control unit 434 of the transmission device transmits a COT sharing request to the reception device (Step S303).

Note that the COT sharing request may be transmitted by the sidelink. Further, the COT sharing request is preferably included in the SCI. In addition, the COT sharing request may be notified as a scheduling request (SR) or a buffer status report (BSR), or may be notified as information different from the SR or the BSR.

Note that the COT sharing request is sent in a COT different from the COT acquired by the reception device. Note that the COT sharing request may be sent via a licensed band. In addition, the COT sharing request may be sent via the base station 20 or another terminal device 40.

The reception device that has received the COT sharing request performs channel access to acquire the COT (Step S304). Then, the reception device transmits the COT sharing information to the transmission device (Step S305). The acquisition unit 431 of the transmission device acquires the COT sharing information from the reception device. The acquisition unit 431 of the transmission device specifies the channel occupancy time (COT) on the basis of the COT sharing information.

Note that, as the method of transmitting the COT sharing information provided from the another terminal device 40 through the sidelink communication, various methods can be employed as described in Case 1-1. For example, the COT sharing information provided from the another terminal device 40 may be included in the SCI. Further, for example, the COT sharing information provided from the another terminal device 40 through sidelink communication can be transmitted through the PSFCH or a sidelink channel having a configuration similar to that of the PSFCH. Furthermore, for example, the COT sharing information provided from the another terminal device 40 through the sidelink communication can be transmitted through MAC layer signaling or RRC layer signaling. In addition, for example, the method of transmitting the COT sharing information provided from the another terminal device 40 through the sidelink communication may be determined, defined, or changed according to the cast type (that is, unicast, groupcast, or broadcast) of the sidelink communication. In addition, as the method of transmitting the COT sharing information, the method described in Case 1-1 can be employed.

The determination unit 433 of the transmission device determines the sidelink transmission resource on the basis of the information of the COT specified by the COT sharing information (Step S306). Then, the communication control unit 434 of the transmission device performs sidelink communication using the determined resource (Step S207) .

Note that the transmission device may determine the sidelink transmission resource before acquiring the COT sharing information. Thus, a process delay due to the resource determination processing can be reduced. When the COT sharing information cannot be obtained before the sidelink transmission resource, the transmission device gives up sidelink transmission on the resource and selects a new sidelink transmission resource from the resource pool.

### (Case 1-3)

Another case where a communication device other than the transmission device is the COT acquirer is a case where the base station 20 or the primary terminal device is the COT acquirer. The base station 20 or the primary terminal device performs channel access on behalf of the transmission device, and shares the COT with the transmission device. Also in this case, since the transmission device does not need to perform channel access, this contributes to a reduction in power consumption of the transmission device.

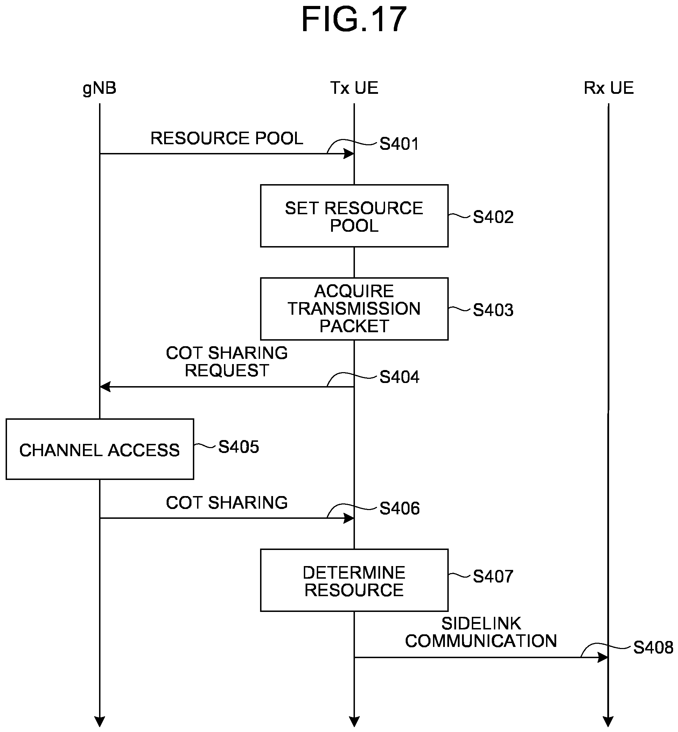

FIG. 17 is a diagram illustrating another example of the transmission resource determination sequence in a case where the COT acquirer is the base station 20. In the drawing, Tx UE is the terminal device 40 (transmission device) that becomes the transmission side in the sidelink communication (Step S408 illustrated in FIG. 17). Rx UE is the terminal device 40 (reception device) that becomes the reception side in the sidelink communication (Step S408 illustrated in FIG. 17). gNB is the base station 20. Note that the base station 20 is not necessarily a gNB.

First, the base station 20 transmits information (referred to as resource pool setting information) for setting a resource pool to the transmission device (Step S401). The acquisition unit 431 of the transmission device acquires the resource pool setting information from the base station 20. Then, the setting unit 432 of the transmission device sets the resource pool on the basis of the information from the base station 20 (Step S402).

Next, the acquisition unit 431 of the transmission device acquires a transmission packet (Step S403). Upon acquiring the transmission packet, the communication control unit 434 of the transmission device transmits a COT sharing request to the base station 20 (Step S404). The reception device that has received the COT sharing request performs channel access to acquire the COT (Step S405). Then, the reception device transmits the COT sharing information to the transmission device (Step S406). The acquisition unit 431 of the transmission device acquires the COT sharing information from the reception device. The acquisition unit 431 of the transmission device specifies the channel occupancy time (COT) on the basis of the COT sharing information.

Note that, when the COT acquirer is the base station 20, the COT sharing request is sent in the uplink, and the COT sharing information is transmitted in the downlink. Specifically, the COT sharing request is included in a UCI, and the COT sharing information is included in a DCI. The COT sharing request may be notified as a scheduling request (SR) or a buffer status report (BSR), or may be notified as information different from the SR or the BSR. The COT sharing information may be sent to the terminal device group in common by using the DCI format 2_0, or may be sent to only the transmission device by using the DCI format 3.

The determination unit 433 of the transmission device determines the sidelink transmission resource on the basis of the information of the COT specified by the COT sharing information (Step S407). Then, the communication control unit 434 of the transmission device performs sidelink communication using the determined resource (Step S408) .

Note that, in the example of FIG. 17, the base station 20 is the COT acquirer, but the primary terminal device of the terminal device group including the transmission device and the reception device may be the COT acquirer. When the primary terminal device acquires the COT, the COT sharing request and the COT sharing information are sent on a sidelink.

Note that, when the base station 20 acquires the COT, the resource allocation mode 1 may be applied. That is, the base station 20 may also select the sidelink transmission resource and transmit the selected resource to the transmission device together with the COT sharing information. Note that, in this case, the base station 20 may not explicitly transmit the COT sharing information to the transmission device. The transmission device may recognize that the COT is shared by receiving information of the sidelink transmission resource.

### <Second embodiment>

Next, the second pattern will be described.

In the second embodiment, the terminal device 40 dynamically sets the resource pool after acquiring the COT. Specifically, the terminal device 40 sets one or a plurality of resources in the COT period as a resource pool. In the second embodiment, COT acquisition or COT sharing occurs before resource pool setting.

In the second embodiment, first, the terminal device 40 acquires information of the COT acquired through channel access. After acquiring the information of the COT, the terminal device 40 sets one or a plurality of resources available as sidelink transmission resources within the COT period as a resource pool. The terminal device 40 selects a sidelink transmission resource from the resource pool and performs sidelink communication.

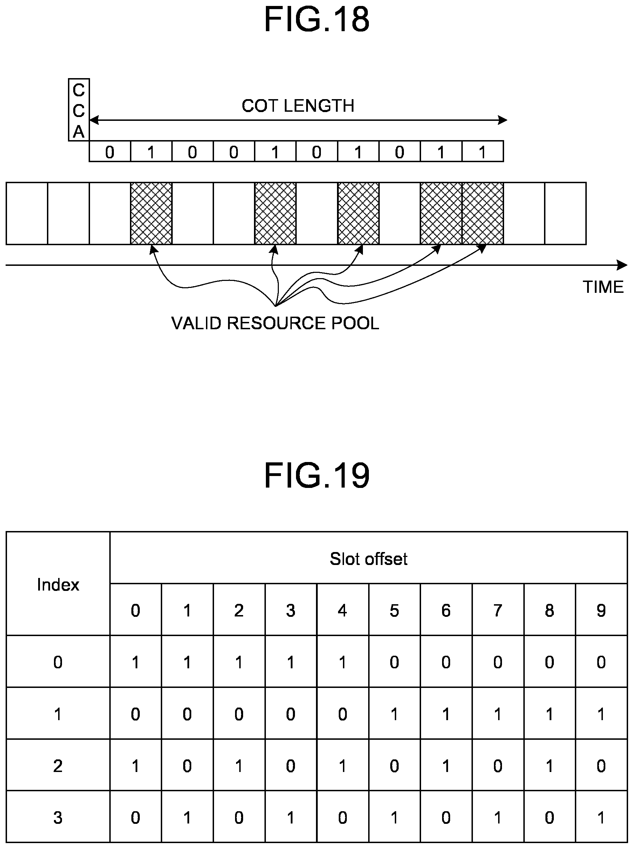

FIG. 18 is a diagram illustrating an example of dynamic resource pool setting based on the COT period. When performing sidelink transmission, the terminal device 40 performs channel access to acquire the COT. After acquiring the COT, the terminal device 40 sets a resource pool that can be utilized as the sidelink transmission resource on the basis of the COT period. Finally, the terminal device 40 selects a resource to be used for sidelink transmission from the set resource pool, and executes sidelink communication.

### <Setting parameter of dynamic resource pool>

In a case where the setter of a dynamic resource pool is the transmission device, transmission of a setting parameter of the dynamic resource pool to another communication device is not necessary. On the other hand, in a case where the setter of the dynamic resource pool is other than the transmission device (for example, the base station 20), it is necessary to provide the setting parameter of the dynamic resource pool to the transmission device. Hereinafter, an example of the setting parameter of the dynamic resource pool will be described.

An example of the setting parameter of the dynamic resource pool is a bitmap. As illustrated in FIG. 18, the resource pool is set by a bitmap in which the number of bits is the number of slots within the COT length. When a value of a bit of the bitmap indicates 1, the corresponding slot is set as the resource pool, and when the number of bits of the bitmap indicates 0, the corresponding slot is not set as the resource pool. By performing notification with the bitmap, the resource pool can be flexibly set.

Another example of the setting parameter of the dynamic resource pool is information of an index indicating a bitmap pattern. FIG. 19 is a diagram illustrating an example of a bitmap pattern of the dynamic resource pool setting. In the example of FIG. 19, a designation pattern of a resource pool for four 10 slots is defined. The terminal device 40 sets the resource pool from an index of a table on the basis of the bitmap of the resource pool to be applied. In the case of this example, it is possible to compress the amount of information necessary for notification as compared with the example of notifying by the bitmap. For example, a case where the COT length is 10 slots will be considered. In the case of notification by the bitmap, 10 bits are necessary for notification. On the other hand, in the case of notification by the index indicating the bitmap pattern, only 2 bits are necessary for the notification in the example of FIG. 19. This can reduce signaling overheads.

Another example of the setting parameter of the dynamic resource pool is the COT length. In this example, all the slots included in the acquired COT period are set as the resource pool. In this example, the communication device may send only the COT length information and may not send information of the dynamic resource pool setting.

Another example of the setting parameter of the dynamic resource pool is the start position (slot offset) and the length of the resource pool. In this example, it is assumed that the resource pool is consecutively allocated on a time axis. As an offset indicating the start position of the resource pool, an offset from the slot in which the COT is acquired or an offset from the slot in which the COT sharing information is received is assumed. Note that information of the end position of the resource pool may be used instead of the information of the length of the resource pool. This also enables specification of the length of the resource pool. Note that the length of the resource pool is preferably equal to or less than the COT length.

Note that the slot or symbol that can be used as the signed link resource may be set in advance from the upper layer separately from the dynamic resource pool setting. Specifically, among the uplink symbols, a symbol that can be used as a sidelink may be set in advance from an upper layer. In this case, only the slot specified by both the setting of a resource that can be used as a preset sidelink resource from the upper layer and the setting of the dynamic resource pool described above can be applied as the sidelink resource.

Note that a case where the COT for the sidelink communication can be acquired but the setting of the dynamic resource pool cannot be acquired can be assumed. In this case, the terminal device 40 applies the default resource pool setting. As an example, the terminal device 40 sets all slots as the resource pool. As another example, the terminal device 40 does not set all slots as the resource pool.

### <Signaling information in dynamic resource pool setting>

In the second embodiment, since the resource pool is set after the dynamically determined COT period, the resource pool setting information is dynamically provided. Specifically, the resource pool setting information is provided by the DCI or the SCI. The resource pool setting information is information for setting the resource pool.

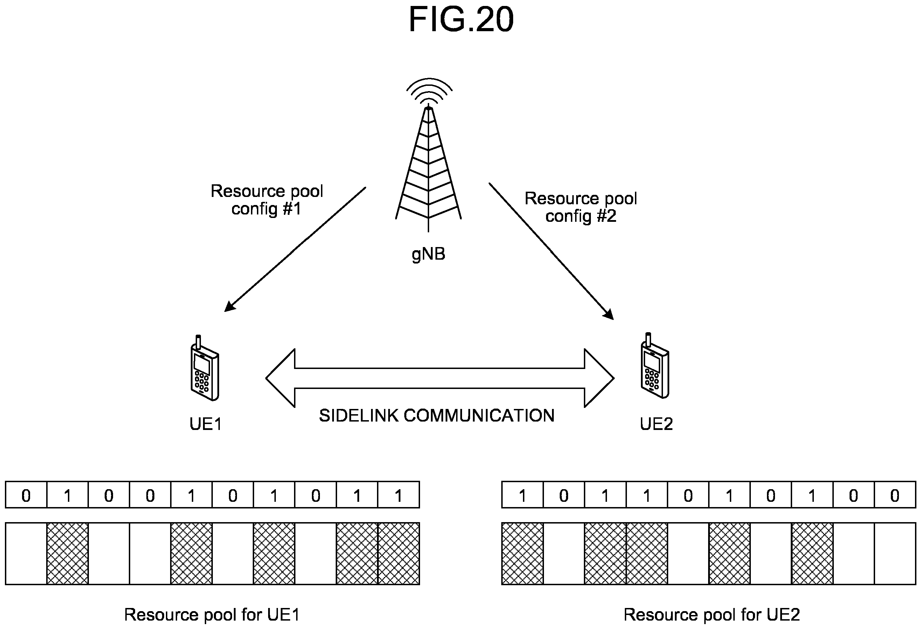

In the dynamic resource pool setting, inter-UE coordination may be performed. FIG. 20 is a diagram illustrating an example of inter-UE coordination in dynamic resource pool setting. In this example, it is assumed that the base station 20 (gNB illustrated in FIG. 20) acquires the COT and shares the COT with two terminal devices 40 (UE1 and UE2 illustrated in FIG. 20) for sidelink communication. In this case, the base station 20 further sets the resource pool in the COT period. Providing different resource pool settings for UE1 and UE2 can prevent contention of sidelink transmissions of UE1 and UE2.

Preferably, the COT sharing information is commonly sent to the terminal device groups. In the example of FIG. 20, a COT length indicator (COT Length Indicator) included in the DCI format 2_0 is simultaneously sent to a plurality of terminal devices 40.

Preferably, the dynamic resource pool setting is individually set for the terminal devices 40. As an example of the dynamic resource pool setting method for individually setting the terminal devices 40, an explicit setting method and an implicit setting method are assumed.

As the explicit setting method, there is notification by control information (DCI or SCI) for each of the terminal devices 40. When the resource pool setter is the base station 20, the resource pool setting information is included in the DCI and transmitted. As an example, the resource pool setting information is included in the DCI format 3_0 and notified to the transmission device. As another example, the resource pool setting information is included in DCI (for example, DCI format 3_2) for a new sidelink and notified to the transmission device. The new DCI for sidelink is used to notify sidelink assistance information including resource pool setting information. In a case where the dynamic resource pool setting is provided from the terminal device 40, unicast sidelink transmission is used.

As the implicitly setting method, there is setting based on information unique to the terminal device 40. Examples of the information unique to the terminal device 40 include a cell-radio network temporary identifier (C-RNTI), a transmission source ID (source ID), a transmission destination ID (destination ID), and the like, for example. As a specific setting method, the resource pool unique to the terminal device 40 is set from the dynamic resource pool setting information included in common in the terminal device groups and the terminal device 40 unique ID.

Some sequence examples of the second embodiment will be described below.

### <Sequence example in case where COT acquirer is transmission device>

First, a sequence example in a case where the COT acquirer is the transmission device will be described.

In a case where the COT acquirer is the transmission device, the sequence varies depending on the resource pool setter. Hereinafter, the sequence will be described separately for a case where the resource pool setter is the transmission device and a case where the resource pool setter is other than the transmission device.

### (Case 2-1)

First, the case where the resource pool setter is the transmission device will be described.

In a case where both the COT acquirer and the resource pool setter are transmission devices, both the channel access and the resource pool setting are performed by the transmission device. Thus, signaling for providing the COT sharing information and the resource pool setting information to another communication device is unnecessary.

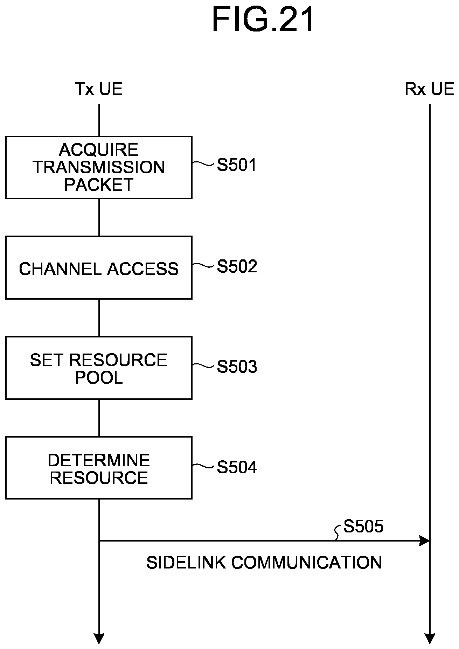

FIG. 21 is a diagram illustrating an example of a dynamic resource pool setting sequence in a case where both the COT acquirer and the resource pool setter are transmission devices. In the drawing, Tx UE is the terminal device 40 (transmission device) that becomes the transmission side in the sidelink communication. Rx UE is the terminal device 40 (reception device) that becomes the reception side in the sidelink communication.

The acquisition unit 431 of the transmission device acquires a transmission packet (Step S501). Upon acquiring the transmission packet, the acquisition unit 431 of the transmission device performs channel access to acquire the COT (Step S502).

In a case where the COT can be acquired, the setting unit 432 of the transmission device sets the resource pool on the basis of the information of the COT period (Step S503). Then, the determination unit 433 of the transmission device determines a resource to be used for sidelink transmission from the resource pool (Step S504). Then, the communication control unit 434 of the transmission device performs sidelink communication using the determined resource (Step S505).

### (Case 2-2)

Next, a case where the resource pool setter is other than the transmission device will be described.

In a case where the COT acquirer is the transmission device and the resource pool setter is the base station 20 or the primary terminal device, signaling of information related to COT acquisition and resource pool setting information from the transmission device is necessary.

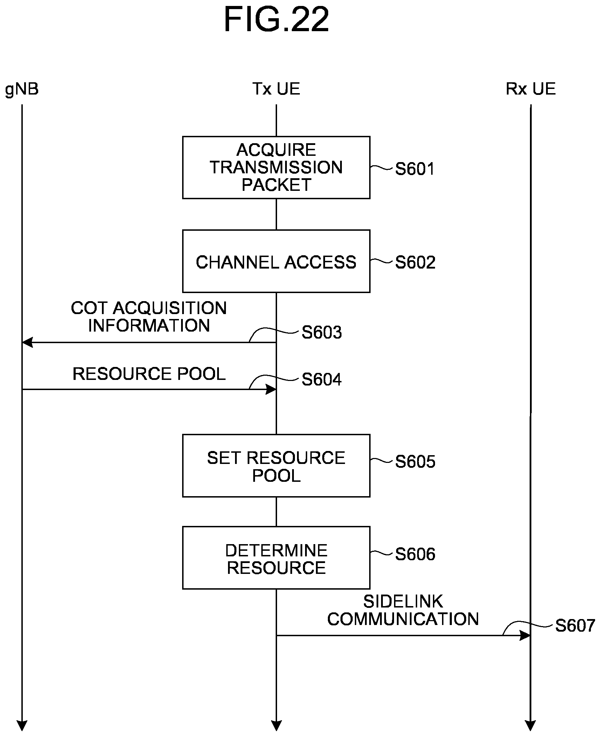

FIG. 22 is a diagram illustrating an example of the dynamic resource pool setting sequence in a case where the COT acquirer is the transmission device and the resource pool setter is the base station 20. In the drawing, Tx UE is the terminal device 40 (transmission device) that becomes the transmission side in the sidelink communication (Step S607 illustrated in FIG. 22). Rx UE is the terminal device 40 (reception device) that becomes the reception side in the sidelink communication (Step S607 illustrated in FIG. 22). gNB is the base station 20. Note that the base station 20 is not necessarily a gNB.

The acquisition unit 431 of the transmission device acquires a transmission packet (Step S601). Upon acquiring the transmission packet, the acquisition unit 431 of the transmission device performs channel access to acquire the COT (Step S602).

After acquiring the COT, the communication control unit 434 of the transmission device transmits COT acquisition information (COT acquirement Acknowledgement) to the base station 20 (Step S603). After receiving the COT acquisition information, the base station 20 generates the resource pool setting information on the basis of the COT acquisition information. Then, the base station 20 transmits the resource pool setting information to the transmission device (Step S604).

Note that, when the resource pool setter is the base station 20, the transmission device transmits the UCI including the COT acquisition information. As an example, the transmission device includes the COT acquisition information in configured grant (CG)-UCI as a part of the COT sharing information and notifies the base station 20 of the COT acquisition information. Note that the transmission device may transmit the COT acquisition information in an UL-SCH (Uplink Shared Channel).

The COT acquisition information includes at least information indicating the COT period. The information indicating the COT period may be information such as a COT start timing and a COT length, a remaining COT length, a COT end timing, or a channel access priority class (CAPC).

The acquisition unit 431 of the transmission device acquires the resource pool setting information from the base station 20. The setting unit 432 of the transmission device sets the resource pool on the basis of the resource pool setting information (Step S605). Then, the determination unit 433 of the transmission device determines a resource to be used for sidelink transmission from the resource pool (Step S606). Then, the communication control unit 434 of the transmission device performs sidelink communication using the determined resource (Step S607).

### <Sequence example in case where COT acquirer is other than transmission device>

Even when the COT acquirer is other than the transmission terminal device, the sequence is different depending on the resource pool setter. Hereinafter, the communication sequence will be described separately for a case where the resource pool setter is the transmission device and a case where the resource pool setter is other than the transmission device.

### (Case 2-3)

First, the case where the resource pool setter is the transmission device will be described.

In a case where the COT acquirer is the reception device and the resource pool setter is the transmission device, signaling of information regarding sharing of the COT acquired by the reception device is necessary.

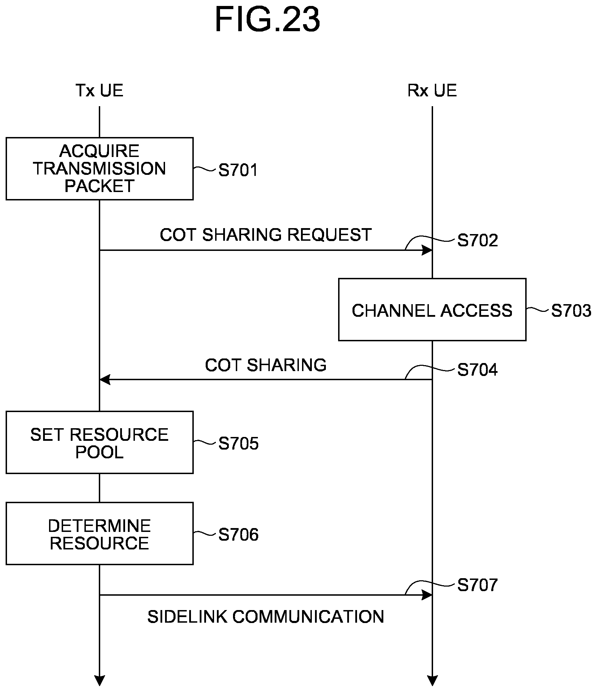

FIG. 23 is a diagram illustrating an example of the dynamic resource pool setting sequence in a case where the COT acquirer is a reception terminal device and the resource pool setter is the transmission device. In the drawing, Tx UE is the terminal device 40 (transmission device) that becomes the transmission side in the sidelink communication (Step S707 illustrated in FIG. 23). Rx UE is the terminal device 40 (reception device) that becomes the reception side in the sidelink communication (Step S707 illustrated in FIG. 23).

The acquisition unit 431 of the transmission device acquires a transmission packet (Step S701). Upon acquiring the transmission packet, the communication control unit 434 of the transmission device transmits a COT sharing request to the reception device (Step S702). Note that, in a case where the COT sharing information has been acquired in advance, the transmission device may skip this step.

Note that the COT sharing request is sent in a COT different from the COT acquired by the reception device. Note that the COT sharing request may be sent via a licensed band. In addition, the COT sharing request may be sent via the base station 20 or another terminal device 40.

The reception device that has received the COT sharing request performs channel access to acquire the COT (Step S703). Then, the reception device transmits the COT sharing information to the transmission device (Step S704). The acquisition unit 431 of the transmission device acquires the COT sharing information from the reception device. The acquisition unit 431 of the transmission device specifies the COT (of the channel occupancy time) on the basis of the COT sharing information.

Note that, as the method of transmitting the COT sharing information provided from the another terminal device 40 through the sidelink communication, various methods can be employed as described in Case 1-1. For example, the COT sharing information provided from the another terminal device 40 may be included in the SCI. Further, for example, the COT sharing information provided from the another terminal device 40 through sidelink communication can be transmitted through the PSFCH or a sidelink channel having a configuration similar to that of the PSFCH. Furthermore, for example, the COT sharing information provided from the another terminal device 40 through the sidelink communication can be transmitted through MAC layer signaling or RRC layer signaling. In addition, for example, the method of transmitting the COT sharing information provided from the another terminal device 40 through the sidelink communication may be determined, defined, or changed according to the cast type (that is, unicast, groupcast, or broadcast) of the sidelink communication. In addition, as the method of transmitting the COT sharing information, the method described in Case 1-1 can be employed.

Upon acquiring the COT sharing information, the setting unit 432 of the transmission device sets the resource pool on the basis of the information of the COT (Step S705). Then, the determination unit 433 of the transmission device determines a resource to be used for sidelink transmission from the resource pool (Step S706). Then, the communication control unit 434 of the transmission device performs sidelink communication using the determined resource (Step S707).

### (Case 2-4)

Next, a case where the resource pool setter is other than the transmission device will be described.

In a case where both the COT acquirer and the generator of the resource pool setting information are the base station 20, signaling of the information regarding sharing of the COT acquired by the reception device and the resource pool setting information is necessary.

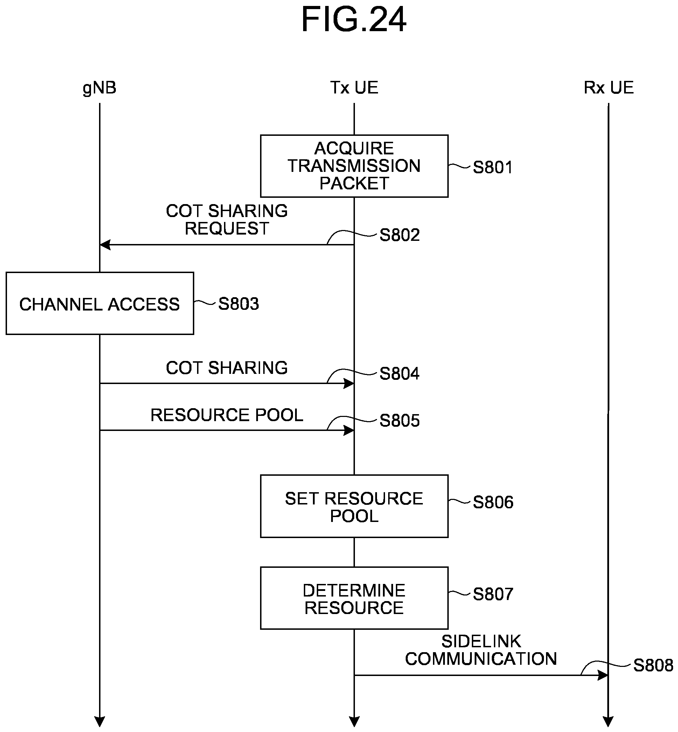

FIG. 24 is a diagram illustrating an example of the dynamic resource pool setting sequence in a case where both the COT acquirer and the generator of the resource pool setting information are the base station 20. In the drawing, Tx UE is the terminal device 40 (transmission device) that becomes the transmission side in the sidelink communication (Step S808 illustrated in FIG. 24). Rx UE is the terminal device 40 (reception device) that becomes the reception side in the sidelink communication (Step S808 illustrated in FIG. 24). gNB is the base station 20. Note that the base station 20 is not necessarily a gNB.

The acquisition unit 431 of the transmission device acquires a transmission packet (Step S801). Upon acquiring the transmission packet, the communication control unit 434 of the transmission device transmits a COT sharing request to the base station 20 (Step S802).

The base station 20 that has received the COT sharing request performs channel access to acquire the COT (Step S803). Then, the base station 20 transmits the COT sharing information to the transmission device (Step S804). In addition, the base station 20 generates the resource pool setting information on the basis of the information of the COT specified by the COT sharing information, and transmits the resource pool setting information to the transmission device (Step S805).

Upon acquiring the resource pool setting information, the setting unit 432 of the transmission device sets the resource pool on the basis of the resource pool setting information (Step S806). Then, the determination unit 433 of the transmission device determines a resource to be used for sidelink transmission from the resource pool (Step S807). Then, the communication control unit 434 of the transmission device performs sidelink communication using the determined resource (Step S808).

Note that, in the example of FIG. 24, the base station 20 acquires the COT and generates the resource pool setting information, but the primary terminal device of the terminal device group including the transmission device and the reception device may acquire the COT and generate the resource pool setting information. In this case, the COT sharing request, the COT sharing information, and the resource pool setting information are transmitted on the sidelink.

Furthermore, in the present case, the generator of the resource pool setting information may be the transmission device. In this case, the base station 20 may set a plurality of resource pool candidates in the transmission device in advance, and the transmission device may switch the setting among the resource pool candidates according to the situation. Examples of conditions include received power (RSRP) from the base station 20, positions and geographic zones of transmission devices, positions of reception devices, number of reception devices in a groupcast, and the like.

### <Third embodiment>

Next, the third pattern will be described.

In the third embodiment, the COT is acquired after the transmission resource is determined. Specifically, the transmission device selects a sidelink transmission resource from the resource pool, and performs channel access immediately before a time indicated by the selected resource.

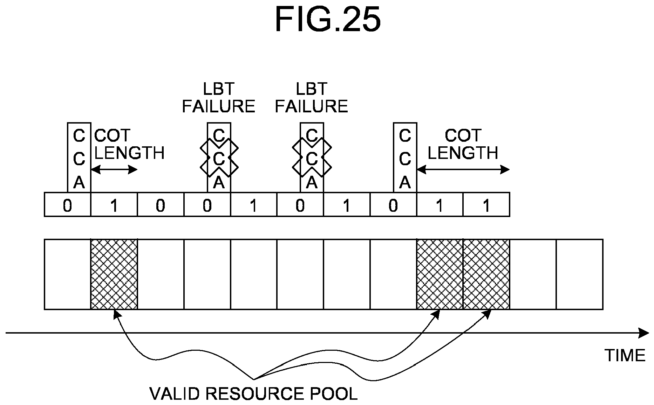

FIG. 25 is a diagram for describing COT acquisition processing according to the third embodiment. The terminal device 40 performs channel access (CCA illustrated in FIG. 25) immediately before the time indicated by the selected sidelink transmission resource. That is, the terminal device 40 performs channel access such that the time indicated by the sidelink transmission resource is included in the channel occupancy time. Specifically, the terminal device 40 performs channel access on the 14th gap symbol of the slot immediately before the resource pool. In other words, the terminal device 40 does not perform channel access except for the 14th gap symbol of the slot immediately before the resource pool. When the channel access succeeds and the COT can be acquired, the terminal device 40 performs sidelink transmission. On the other hand, when the channel access fails and the COT cannot be acquired, the terminal device 40 drops the sidelink transmission. That is, in the third embodiment, the COT is acquired after the selection of the sidelink transmission resource.

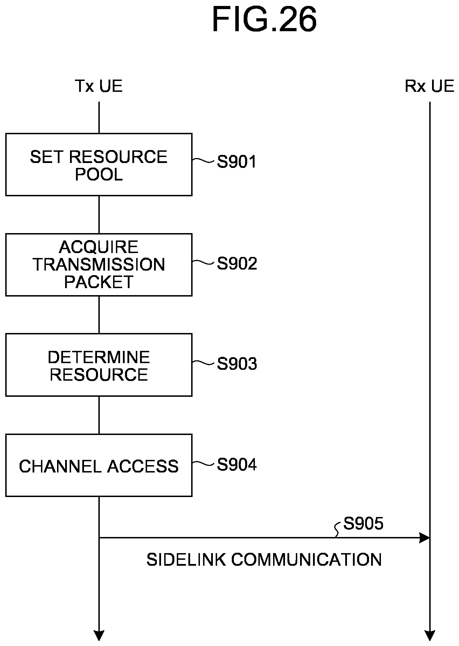

FIG. 26 is a diagram illustrating an example of a resource pool determination sequence according to the third embodiment. In the drawing, Tx UE is the terminal device 40 (transmission device) that becomes the transmission side in the sidelink communication. Rx UE is the terminal device 40 (reception device) that becomes the reception side in the sidelink communication.

First, the setting unit 432 of the transmission device sets a resource pool (Step S901). At this time, the setting unit 432 of the transmission device may set the resource pool on the basis of the initial setting, or may set the resource pool on the basis of the information for resource pool setting acquired from the base station 20.

Next, the acquisition unit 431 of the transmission device acquires a transmission packet (Step S902). The determination unit 433 of the transmission device selects a resource to be used for sidelink transmission from the resource pool (Step S903). Thereafter, the communication control unit 434 of the transmission device performs the channel access such that the time indicated by the selected resource is included in the COT period (Step S904).

When the COT can be acquired, the communication control unit 434 of the transmission device performs sidelink communication using the selected resource (Step S905). When the COT cannot be acquired, the communication control unit 434 of the transmission device drops the sidelink communication.

### <<Modifications>>

The above-described embodiments are examples, and various modifications and applications are possible.

### <Limitation of maximum COT length>

The communications device may set a limit on the maximum COT length. For example, the communication device may set the maximum COT length as a length of consecutive slots included in the set resource pool. In other words, different COTs may be applied to resource pools that are not consecutive (non-consecutive) on the time axis. Temporally consecutive resource pools may also be referred to as a resource pool burst. The communications device may perform channel access for each resource pool burst, and acquire the COT. Note that, in a case where sidelink transmission (for example, transmission from the reception device) is present between resource pools discontinuous on the time axis, the communication device may apply the same COT.

### <Switching of application of embodiment according to condition>

In the above-described the first to third embodiments, application may be switched according to a condition. An example of the condition includes a traffic type. For example, the terminal device 40 may apply the first embodiment to periodic traffic, and may apply the second embodiment to aperiodic traffic. In addition, the condition may be an instruction from the base station 20. At this time, the terminal device 40 that executes the sidelink communication may switch application of the first embodiment, the second embodiment, and the third embodiment according to higher layer setting (RRC setting) from the base station 20.

### <Update of resource pool based on COT Information of another sidelink>

The terminal device 40 may appropriately update the setting of the resource pool on the basis of COT information used for sidelink communication of another terminal device 40. For example, the terminal device 40 acquires COT information of the another terminal device 40 from the DCI or the SCI. The resource pool is updated so as to exclude the period occupied by the COT information of the other terminal device 40 from the acquired COT information of the another terminal device 40. This makes it possible to prevent contention with sidelink communication of the another terminal device 40.

### <Configuration of transmission gap in sidelink transmission>

In the unlicensed band, when the transmission gap is equal to or less than 16 microseconds, the LBT can be omitted before transmission. An example for configuring a transmission gap that is equal to or less than 16 microseconds is described below.

As an example, a signal is also sent on the 14th gap symbol. Thus, a transmission gap between slots can be configured to be equal to or less than 16 microseconds.

As another example, in addition to the signal transmission of the 14th gap symbol, the transmission for the first 16 microseconds of the AGC symbol of the first symbol is stopped.

### <Sidelink resource selection in unlicensed band>

In the sidelink communication in the licensed band, a resource pool is specified by an operation such as sensing, and a resource actually used for the sidelink is randomly selected from the resource pool. On the other hand, in the sidelink communication in the unlicensed band, the resources actually used for the sidelink are preferably temporally continuous. When selecting a plurality of resources, the terminal device 40 selects consecutive slots from the resource pool so as to be temporally continuous as much as possible. Note that when consecutive slots are selected, the last symbol (14th symbol) may not be a gap symbol, and for example, a PSSCH symbol or an AGC symbol (the same symbol as any of the 1st symbol to the 13th symbol) may be transmitted as the last symbol. Thus, gaps can be filled between sidelink transmissions, so that LBT can be omitted. When the signal is transmitted on the 14th symbol, the reception terminal device is preferably notified of this. The instruction to send the above signal on the 14th symbol may be explicitly notified by the SCI, or may be implicitly notified by time domain resource allocation (TDRA) (that is, from information of TDRA, it is recognized that a signal is always transmitted on the 14th symbol in a case where it is notified that consecutive slots are allocated).

### <Notification of channel access (LBT) failure>

In the sidelink communication of the unlicensed band, when the channel access fails, the terminal device 40 may notify the reception terminal device or the base station 20 of the failure of the channel access through subsequent communication. Information regarding the channel access failure includes a timing at which the channel access has failed, the number of failures, a frequency, and the like. The terminal device 40 or the base station 20 that has received the information regarding the channel access failure can change the setting of the resource pool and the resource selection criterion on the basis of the information.

### <Other modifications>

A control device that controls the management device 10, the base station 20, the relay station 30, and the terminal device 40 of the present embodiment may be implemented by a dedicated computer system or a generalpurpose computer system.

For example, a communication program for executing the above-described operation is stored in a computer-readable recording medium such as an optical disk, a semiconductor memory, a magnetic tape, or a flexible disk and distributed. Then, for example, by installing the program in a computer and executing the above-described processing, the control device can be configured. At this time, the control device may be a device (for example, a personal computer) outside the management device 10, the base station 20, the relay station 30, and the terminal device 40. In addition, the control device may be a device (for example, the control unit 13, the control unit 23, the control unit 33, and the control unit 43) inside the management device 10, the base station 20, the relay station 30, and the terminal device 40.

In addition, the communication program may be stored in a disk device included in a server device on a network such as the Internet so that the communication program can be downloaded to a computer. Further, the above-described functions may be implemented by cooperation of an operating system (OS) and application software. In this case, a portion other than the OS may be stored in a medium and distributed, or a portion other than the OS may be stored in a server device, and downloading to a computer, or the like can be performed.

In addition, among the processes described in the above embodiments, all or part of the processes described as being performed automatically can be performed manually, or all or part of the processes described as being performed manually can be performed automatically by a publicly known method. Further, the processing procedure, specific name, and information including various data and parameters illustrated in the document and the drawings can be arbitrarily changed unless otherwise specified. For example, the various types of information depicted in each figure are not limited to the depicted information.

Further, each component of each device depicted in the drawings is functionally conceptual, and is not necessarily physically configured as depicted in the drawings. That is, a specific form of distribution and integration of each device is not limited to the illustrated form, and all or a part thereof can be functionally or physically distributed and integrated in any unit according to various loads, usage conditions, and the like. Note that this configuration by distribution and integration may be performed dynamically.

Further, the above-described embodiments can be appropriately combined in a region in which the processing contents do not contradict each other. Furthermore, the order of each step illustrated in the flowchart of the above-described embodiment can be appropriately changed.

Furthermore, for example, the present embodiment can be implemented as any configuration constituting a device or a system, for example, a processor as a system large scale integration (LSI) or the like, a module using a plurality of processors or the like, a unit using a plurality of modules or the like, a set obtained by further adding other functions to a unit, or the like (that is, a configuration of a part of the device).

Note that, in the present embodiment, the system means a set of a plurality of components (devices, modules (parts), and the like), and it does not matter whether or not all the components are in the same housing. Therefore, a plurality of devices housed in separate housings and connected via a network and one device in which a plurality of modules is housed in one housing are both systems.

In addition, for example, the present embodiment can employ a configuration of cloud computing in which one function is shared and processed by a plurality of devices in cooperation via a network.

### <<Conclusion>>

As described above, according to an embodiment of the present disclosure, the terminal device 40 acquires information regarding channel occupancy time and sets a resource pool to be used for sidelink communication. Then, the terminal device 40 determines a resource to be used for the sidelink communication from the set resource pool. The resource to be used by the terminal device 40 for the sidelink communication is a resource whose time overlaps the channel occupancy time among resources of the set resource pool. For example, after acquiring the information of the channel occupancy time, the terminal device 40 excludes a resource whose time is not included in the channel occupancy time from the selection candidates, and selects a resource to be used for the sidelink communication from the remaining resources of the resource pool. Then, the terminal device 40 performs the sidelink communication within the channel occupancy time by using the determined resource. Thus, even in a case where the unlicensed band is used for the sidelink communication, the terminal device 40 can achieve high communication performance.

Although the embodiments of the present disclosure have been described above, the technical scope of the present disclosure is not limited to the above-described embodiments as it is, and various modifications can be made without departing from the gist of the present disclosure. In addition, components of different embodiments and modification examples may be appropriately combined.

In addition, the effects in the embodiments described in the present description are merely examples and are not limited, and other effects may be provided.

Note that the present technology can also have the following configurations.
(1) A communication device comprising:
   a communication control unit that performs sidelink communication on an unlicensed channel within a channel occupancy time of the unlicensed channel;
   a setting unit that sets a resource pool to be used for the sidelink communication; and
   a determination unit that determines a resource to be used for the sidelink communication from the set resource pool.
(2) The communication device according to (1), wherein
   the resource to be used for the sidelink communication is a resource whose time overlaps with the channel occupancy time among resources of the set resource pool.
(3) The communication device according to (1) or (2), further comprising:
   an acquisition unit that acquires at least one of information for setting the resource pool or information of the channel occupancy time.
(4) The communication device according to (3), wherein
   the acquisition unit acquires information for setting the resource pool from another communication device.
(5) The communication device according to (3) or (4), wherein
   the acquisition unit acquires information of the channel occupancy time from another communication device that performs sensing of the unlicensed channel.
(6) The communication device according to (5), wherein
   the another communication device is a communication device to be a communication partner of the sidelink communication.
(7) The communication device according to (5), wherein
   the another communication device is a communication device different from a communication partner of the sidelink communication.
(8) The communication device according to (7), wherein
   the acquisition unit acquires the information of the channel occupancy time from the another communication device when a relationship between the communication device and a communication device to be a communication partner with the communication device in the sidelink communication satisfies a predetermined condition.
(9) The communication device according to (7) or (8), wherein
   the another communication device is a base station device, and
   the acquisition unit acquires the information of the channel occupancy time from the base station device when the communication device and a communication device to be a communication partner with the communication device in the sidelink communication are connected to the same base station device.
(10) The communication device according to (7), wherein
   the acquisition unit acquires the information of the channel occupancy time from the another communication device when a positional relationship between the communication device and the another communication device satisfies a predetermined condition.
(11) The communication device according to (7), wherein
   the acquisition unit acquires the information of the channel occupancy time from the another communication device when the sidelink communication satisfies a predetermined condition.
(12) The communication device according to (11), wherein
   the acquisition unit acquires the information of the channel occupancy time from the another communication device when a type of data transmission that is a target of the sidelink communication satisfies a predetermined condition.
(13) The communication device according to (12), wherein
   the acquisition unit acquires the information of the channel occupancy time from the another communication device when the type of data transmission that is the target of the sidelink communication is broadcast or groupcast.
(14) The communication device according to (11), wherein
   the acquisition unit acquires the information of the channel occupancy time from the another communication device when a type of data that is a target of the sidelink communication satisfies a predetermined condition.
(15) The communication device according to (14), wherein
   the acquisition unit acquires the information of the channel occupancy time from the another communication device when the type of data that is the target of the sidelink communication is data with a predetermined priority.
(16) The communication device according to any one of (1) to (15), wherein
   after acquiring the information of the channel occupancy time, the determination unit excludes a resource whose time is not included in the channel occupancy time from selection candidates and selects the resource to be used for the sidelink communication from remaining resources of the resource pool.
(17) The communication device according to any one of (1) to (15), wherein
   after acquiring the information of the channel occupancy time, the setting unit performs setting of the resource pool on a basis of the information of the channel occupancy time.
(18) The communication device according to (17), wherein
   the setting unit sets the resource pool in such a manner that a head of the channel occupancy time is a time of a head of the resource pool.
(19) The communication device according to any one of (1) to (15), wherein
   the communication control unit performs sensing of the unlicensed channel in such a manner that a time indicated by a resource selected from the set resource pool is included in the channel occupancy time, and performs the sidelink communication using the selected resource when the sensing is successful.
(20) A communication method, comprising:
   a communication control step of performing sidelink communication on an unlicensed channel within a channel occupancy time of the unlicensed channel;
   a setting step of setting a resource pool to be used for the sidelink communication; and
   a determination step of determining a resource to be used for the sidelink communication from the set resource pool.

### Reference Signs List

1 COMMUNICATION SYSTEM
10 MANAGEMENT DEVICE
20 BASE STATION
30 RELAY STATION
40 TERMINAL DEVICE
11 COMMUNICATION UNIT
21, 31, 41 WIRELESS COMMUNICATION UNIT
12, 22, 32, 42 STORAGE UNIT
13, 23, 33, 43 CONTROL UNIT
211, 311, 411 TRANSMISSION PROCESSING UNIT
212, 312, 412 RECEPTION PROCESSING UNIT
213, 313, 413 ANTENNA
431 ACQUISITION UNIT
432 SETTING UNIT
433 DETERMINATION UNIT
434 COMMUNICATION CONTROL UNIT

## Claims

1. A communication device comprising:
a communication control unit that performs sidelink communication on an unlicensed channel within a channel occupancy time of the unlicensed channel;
a setting unit that sets a resource pool to be used for the sidelink communication; and
a determination unit that determines a resource to be used for the sidelink communication from the set resource pool.

2. The communication device according to claim 1, wherein
the resource to be used for the sidelink communication is a resource whose time overlaps with the channel occupancy time among resources of the set resource pool.

3. The communication device according to claim 1, further comprising:
an acquisition unit that acquires at least one of information for setting the resource pool or information of the channel occupancy time.

4. The communication device according to claim 3, wherein
the acquisition unit acquires information for setting the resource pool from another communication device.

5. The communication device according to claim 3, wherein
the acquisition unit acquires information of the channel occupancy time from another communication device that performs sensing of the unlicensed channel.

6. The communication device according to claim 5, wherein
the another communication device is a communication device to be a communication partner of the sidelink communication.

7. The communication device according to claim 5, wherein
the another communication device is a communication device different from a communication partner of the sidelink communication.

8. The communication device according to claim 7, wherein
the acquisition unit acquires the information of the channel occupancy time from the another communication device when a relationship between the communication device and a communication device to be a communication partner with the communication device in the sidelink communication satisfies a predetermined condition.

9. The communication device according to claim 7, wherein
the another communication device is a base station device, and
the acquisition unit acquires the information of the channel occupancy time from the base station device when the communication device and a communication device to be a communication partner with the communication device in the sidelink communication are connected to the same base station device.

10. The communication device according to claim 7, wherein
the acquisition unit acquires the information of the channel occupancy time from the another communication device when a positional relationship between the communication device and the another communication device satisfies a predetermined condition.

11. The communication device according to claim 7, wherein
the acquisition unit acquires the information of the channel occupancy time from the another communication device when the sidelink communication satisfies a predetermined condition.

12. The communication device according to claim 11, wherein
the acquisition unit acquires the information of the channel occupancy time from the another communication device when a type of data transmission that is a target of the sidelink communication satisfies a predetermined condition.

13. The communication device according to claim 12, wherein
the acquisition unit acquires the information of the channel occupancy time from the another communication device when the type of data transmission that is the target of the sidelink communication is broadcast or groupcast.

14. The communication device according to claim 11, wherein
the acquisition unit acquires the information of the channel occupancy time from the another communication device when a type of data that is a target of the sidelink communication satisfies a predetermined condition.

15. The communication device according to claim 14, wherein
the acquisition unit acquires the information of the channel occupancy time from the another communication device when the type of data that is the target of the sidelink communication is data with a predetermined priority.

16. The communication device according to claim 1, wherein
after acquiring the information of the channel occupancy time, the determination unit excludes a resource whose time is not included in the channel occupancy time from selection candidates and selects the resource to be used for the sidelink communication from remaining resources of the resource pool.

17. The communication device according to claim 1, wherein
after acquiring the information of the channel occupancy time, the setting unit performs setting of the resource pool on a basis of the information of the channel occupancy time.

18. The communication device according to claim 17, wherein
the setting unit sets the resource pool in such a manner that a head of the channel occupancy time is a time of a head of the resource pool.

19. The communication device according to claim 1, wherein
the communication control unit performs sensing of the unlicensed channel in such a manner that a time indicated by a resource selected from the set resource pool is included in the channel occupancy time, and performs the sidelink communication using the selected resource when the sensing is successful.

20. A communication method, comprising:
a communication control step of performing sidelink communication on an unlicensed channel within a channel occupancy time of the unlicensed channel;
a setting step of setting a resource pool to be used for the sidelink communication; and
a determination step of determining a resource to be used for the sidelink communication from the set resource pool.
